(19) Europäisches Patentamt / European Patent Office / Office européen des brevets

(11) **EP 4 280 733 A1**

(12) **EUROPEAN PATENT APPLICATION**
published in accordance with Art. 153(4) EPC

(43) Date of publication:
**22.11.2023 Bulletin 2023/47**

(21) Application number: **22739660.3**

(22) Date of filing: **12.01.2022**

(51) International Patent Classification (IPC):
*H04W 72/02* (2009.01)    *H04W 72/04* (2023.01)
*H04W 52/02* (2009.01)    *H04W 76/28* (2018.01)
*H04W 4/40* (2018.01)    *H04W 92/18* (2009.01)

(52) Cooperative Patent Classification (CPC):
H04W 4/40; H04W 52/02; H04W 72/02;
H04W 72/04; H04W 76/28; H04W 92/18

(86) International application number:
**PCT/KR2022/000544**

(87) International publication number:
**WO 2022/154465 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2021 KR 20210005565**

(71) Applicant: **Innovative Technology Lab Co., Ltd.
Seocho-gu, Seoul 06744 (KR)**

(72) Inventors:
• **LEE, Won Seok
  Seoul 06744 (KR)**
• **PARK, Dong Hyun
  Seoul 06744 (KR)**

(74) Representative: **Diehl & Partner
Patent- und Rechtsanwaltskanzlei mbB
Erika-Mann-Straße 9
80636 München (DE)**

(54) **DRX OPERATION METHOD AND DEVICE IN WIRELESS COMMUNICATION SYSTEM**

(57)    In a wireless communication system, the LTE may provide a method for supporting SL communication. In this case, the method of supporting SL communication by the UE comprises acquiring available SL resource set information from the physical layer of the UE, identifying SL DRX configuration information set in the UE, selecting resources from among the available SL resource set indicated from the physical layer based on the SL DRX configuration information set in the LTE, and performing SL transmission.

**FIG. 12**

Selection window

Ramdomly selected single-slot resource ($R_{x,y}$) according to
• Rx-UE active time
• Rx-UE on-Duration
• Amount of frequency resource
• PDB of SL data

Candidate time/frequency resource ($R_{x,y}$) in $S_A$

Rx-UE on-Duration

**Description**

TECHNICAL FIELD

The present disclosure is directed to method of discontinuous reception (DRX) operation in wireless communication systems. More specifically, method and apparatus for performing DRX operations in a new radio (NR) vehicle to everything (V2X).

RELATED ART

International Mobile Telecommunication (IMT) framework and standard have been developed by the International Telecommunication Union (ITU). Also, continuous discussion for 5-th generation (5G) communication is ongoing through a program called "IMT for 2020 and beyond".

To satisfy the requirements requested by "IMT for 2020 and beyond", various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, occurring on a high carrier frequency, the NR system may support transmission of a physical signal/channel through a plurality of beams. Through this, the NR system may support applications, for example, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to long term evolution (LTE)-based/New Radio (NR) based communication between vehicles, vehicle-to-pedestrian (V2P), which may refer to LTE-based/NR-based communication between a vehicle and a user equipment (UE) carried by a user, and vehicle-to-infrastructure/network (V2I/N), which may refer to LTE-based/NR-based communication between a vehicle and a roadside unit (RSU)/network. The RSU may be a transportation infrastructure entity configured by a base station or a fixed UE, such as, an entity that transmits a speed notification to a vehicle.

However, in an environment where a plurality of UEs, a collision between resources for V2X may occur, thereby causing a delay in V2X communication.

DETAILED DESCRIPTION

TECHNICAL SUBJECT

A technical subject of the present disclosure may provide a method and apparatus for DRX operation in wireless communication systems.

The technical subject of the present disclosure may provide a method and apparatus for selecting resources in consideration of the SL DRX configuration.

The technical subject of the present disclosure may provide a method and apparatus for determining a resource excluded in the resource selection process in consideration of the SL DRX configuration.

The technical subject of the present disclosure may provide methods and apparatus for changing the SL DRX configuration.

The technical subject of the present disclosure may provide methods and devices for adding or deactivating the SL DRX configuration.

Technical subjects achievable from the present disclosure are not limited to the aforementioned technical subjects and still other technical subjects not described herein may be clearly understood by one of ordinary sill in the art to which the disclosure pertains from the following description.

TECHNICAL SOLUTION

In a wireless communication system according to an aspect of the present disclosure, the UE may provide a method for supporting SL (SL) communication. In this case, the method of supporting, by the UE, SL communication comprises acquiring available SL resource set information from the physical layer of the UE, identifying SL DRX configuration information set in the UE, and selecting a resource from a set of available SL resources indicated from the physical layer based on the SL DRX configuration information set in the UE, and performing SL transmission.

Also, a method of supporting SL communication may be provided by the UE in a wireless communication system according to an aspect of the present disclosure. In this case, the method of supporting, by the UE, SL communication comprises determining the selection window by the UE, determining the selection window by the UE, excluding redundant resources through sensing in the determined sensing window, identifying SL DRX configuration information set in the UE, excluding resources based on the SL DRX configuration information set in the LTE, and selecting control information and data transmission resources in a selection window based on the excluded resource information, and performing SL transmission.

EFFECT

According to the present disclosure, a DRX operation method can be provided in a wireless communication system.

According to the present disclosure, by selecting a resource in consideration of the SL DRX configuration, the receiving UE may receive SL data at the active time.

According to the present disclosure, by selecting a resource in consideration of the SL DRX configuration, it is possible to prevent SL data from being transmitted when the transmitting UE receives other data.

According to the present disclosure, it is possible to efficiently exclude unusable resources by performing resource exclusion in consideration of the SL DRX configuration in the resource selection process.

According to the present disclosure, flexible SL DRX operations can be performed by changing, adding, and deactivating SL DRX configurations in consideration of various forms of SL communication.

The features briefly abstracted above with respect to the present disclosure are merely aspects of the detailed description of this disclosure and are not provided to limit the scope of the disclosure.

BRIEF DESCRIPTION OF DRAWINGS

FIG. 1 illustrates an example of an NR frame structure to which the present disclosure may apply.
FIG. 2 illustrates an NR resource structure to which the present disclosure may apply.
FIG. 3 illustrates an NR SL slot structure to which the present disclosure may apply.
FIG. 4 illustrates an NR SL frequency to which the present disclosure may apply.
FIG. 5 illustrates a method of measuring a Channel Busy Ratio (CBR) to which the present disclosure may apply.
FIG. 6 illustrates DRX operation to which the present disclosure may apply.
FIG. 7 illustrates DRX operation to which the present disclosure may apply.
FIG. 8 illustrates the structure of a synchronization signal block to which the present disclosure may apply.
FIG. 9 illustrates the configuration of a MAC PDU to which the present disclosure may apply.
FIG. 10 illustrates an example of a SL transmission slot determination method based on UE sensing to which the present disclosure may apply.
FIG. 11 illustrates a V2X resource allocation scheme to which the present disclosure may be apply.
FIG. 12 illustrates a method of selecting a resource in consideration of the on-duration of the receiving UE in a selection window to which the present disclosure may apply.
FIG. 13 illustrates a method of selecting a resource in consideration of the on-duration of the transmitting UE in a selection window to which the present disclosure may apply.
FIG. 14 illustrates a method of selecting a resource in consideration of the on-duration of the receiving LTE and the on-duration of the transmitting LTE in a selection window to which the present disclosure may apply.
FIG. 15 illustrates a method of selecting a resource by a UE to which the present disclosure may apply.
FIG. 16 illustrates a method of selecting a resource by a UE to which the present disclosure may apply.
FIG. 17 illustrates a method of selecting a resource by the UE in consideration of the on-duration of the receiving UE to which the present disclosure may apply.
FIG. 18 illustrates a method of selecting a resource by the UE in consideration of the active time of the receiving UE to which the present disclosure may be applied.
FIG. 19 illustrates a method of selecting a resource by the UE in consideration of the off-duration of the receiving UE to which the present disclosure may apply.
FIG. 20 illustrates a method of selecting a resource by the UE in consideration of the off-duration and active time of the receiving UE to which the present disclosure may apply.
FIG. 21 illustrates a method of setting a common DRX cycle and a specific DRX period to which the present disclosure may apply.
FIG. 22 illustrates an SL DRX MAC CE to which the present disclosure may apply.
FIG. 23 illustrates a signaling method of SL DRX MAC CE to which the present disclosure may apply.

FIG. 24 is a flowchart illustrating a method of selecting a SL resource by a LTE to which the present disclosure may apply.

FIG. 25 is a flowchart illustrating a method of selecting a SL resource by a LTE to which the present disclosure may apply.

FIG. 26 illustrates a base station device and a UE device to which the present disclosure may apply.

DETAILED DESCRIPTION OF THE ILLUSTRATED EMBODIMENTS

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or intervening elements may be present. Also, it will be further understood that when an element is described to "comprise/include" or "have" another element, it specifies the presence of still another element, but do not preclude the presence of another element uncles otherwise described.

Further, the terms, such as first, second, and the like, may be used herein to describe elements in the description herein. The terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent that the elements are necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, elements described in various examples may not be necessarily essential and may be partially selectable. Therefore, an example including a partial set of elements described in an example is also included in the scope of the present disclosure. Also, an example that additionally includes another element to elements described in various examples is also included in the scope of the present disclosure.

The description described herein is related to a wireless communication network, and an operation performed in a wireless communication network may be performed in a process of controlling a network and transmitting data by a system that controls a wireless network, e.g., a base station, or may be performed in a user equipment

It is apparent that various operations performed for communication with a LTE in a network including a base station and a plurality of network nodes may be performed by the base station or by other network nodes in addition to the base station. Here, the term 'base station (BS)' may be interchangeably used with other terms, for example, a fixed station, a Node B, eNodeB (eNB), gNodeB (gNB), and an access point (AP). Also, the term 'terminal' may be interchangeably used with other terms, for example, user equipment (LTE), a mobile station (MS), a mobile subscriber station (MSS), a subscriber station (SS), and a non-AP station (non-AP STA).

Herein, transmitting or receiving a channel includes a meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, occurring on a high carrier frequency, the NR system may support transmission of a physical signal/channel through a plurality of beams. Through this, the NR system may support applications, for example, enhanced Mobile Broadband (eMBB), massive Machine Type Communications (mMTC)/ultra Machine Type Communications (uMTC), and Ultra Reliable and Low Latency Communications (URLLC).

Here, 5G mobile communication technology may be defined by including the existing Long Term Evolution-Advanced (LTE-A) system as well as the aforementioned NR system. That is, 5G mobile communication technology may operate by considering backward compatibility with a previous system as well as a newly defined NR system. Therefore, following 5G mobile communication may include technology operating based on the NR system and a technology operating based on a previous system (e.g., LTE-A, LTE), and is not limited to a specific system.

First of all, the physical resource structure of the NR system to which the present disclosure is applied will be briefly described.

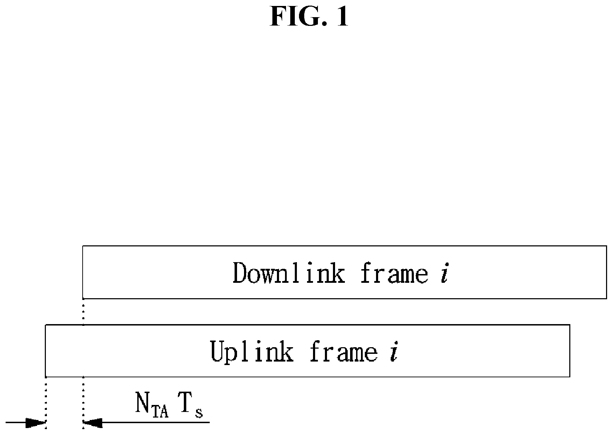

FIG. 1 illustrates an example of an NR frame structure according to an example of the present disclosure.

In NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant about a multiple relationship between an NR time unit and an LTE time unit. In LTE, $T_s = 1/(\Delta f_{ref} \cdot N_{f, ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k=T_s/T_c=64$.

Referring to FIG. 1, a time structure of a frame for a downlink/uplink (DL/UL) transmission may include $T_f = (\Delta f_{max}N_f/100) \cdot T_s = 10ms$. Here, a single frame may include 10 subframes corresponding to $T_{sf} = (\Delta f_{max}N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0~4 subframes and 5~9 subframes. Here, half frame 1 may include 0~4 subframes and half frame 2 may include 5~9 subframes.

$N_{TA}$ represent the timing advance (TA) between downlink (DL) and uplink (UL). Here, a transmission timing of uplink transmission frame i is determined based on a downlink reception timing at a UE according to the following Equation 1.

[Equation 1]

$$T_{TA} = \left(N_{TA} + N_{TA,offset}\right)T_c$$

$N_{TA,offset}$ denotes a TA offset value occurring due to a duplex mode difference and the like. Basically, in a frequency division duplex (FDD), $N_{TA,offset}=0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6GHz or less frequency, $N_{TA,offset}$ may be 39936Tc or 2600Tc. $39936T_C=20.327\mu s$ and $25600T_C=13.030\mu s$. Also, in FR2 (Frequency Range 2) which is millimeter wave (mmWave), $N_{TA,offset}$ may be 13792Tc. At this time, 39936Tc=7.020 $\mu s$.

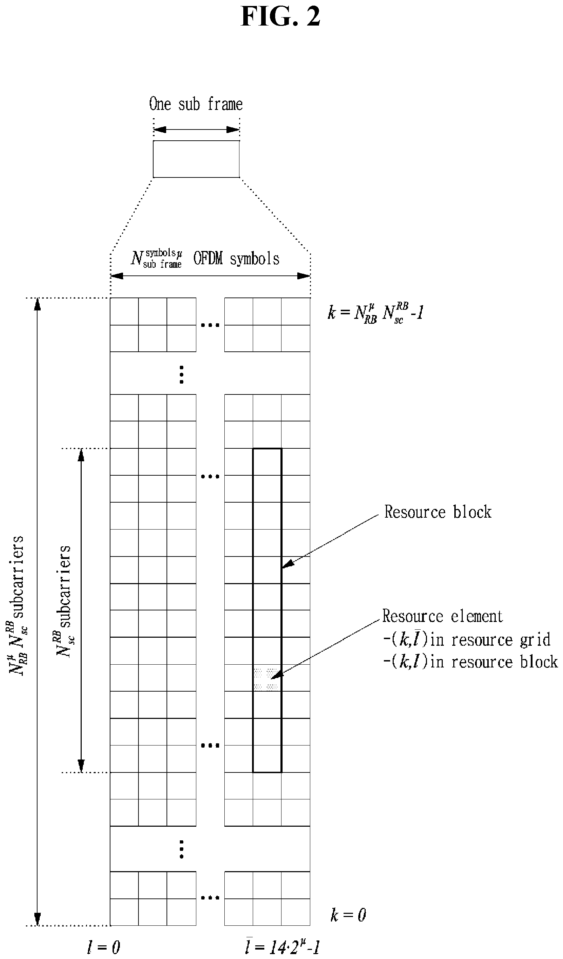

FIG.2 illustrates an NR resource structure to which the present disclosure may apply.

A resource element within a resource grid may be indexed based on each subcarrier spacing. Here, a single resource grid may be generated for each antenna port and for each subcarrier spacing. Uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, $N^{RB}_{sc}$ represents the number of subcarriers per one RB and k represents subcarrier index.

[Equation 2]

$$n_{PRB} = \left\lfloor \frac{k}{N_{sc}^{RB}} \right\rfloor$$

Numerologies may be variously configured to meet various services and requirements of the NR system. For example, one subcarrier spacing (SCS) may be supported in the LTE/LTE-A system, but a plurality of SCS may be supported in the NR system.

A new numerology for the NR system that supports the plurality of SCSs may operate in frequency range or carrier, such as 3 GHz or less, 3 GHz-6 GHz, 6 GHZ-52.6 GHz, or 52.6 GHz or more, to solve an issue that a wide bandwidth is unavailable in frequency range or carrier such as 700 MHz or 2 GHz

Table 1 below shows an example of the numerologies supported by the NR system.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a LTE through higher layer parameters, DL-BWP-mu and DL-BWP-cp, for the downlink, and through higher layer parameter, UL-BWP-mu and UL-BWP-cp, for the uplink.

In above Table 1, if $\mu$ = 2 and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for a length of another time section. Here, for coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having a number of symbols less by at least one symbol than that of the normal slot. For example, in the case of providing a low latency such as an Ultra-Reliable and Low Latency Communications (URLLC) service, a latency may decrease through the non-slot having the number of slots less than that of the normal slot. Here, the number of OFDM symbols included in the non-slot may be determined based on a frequency range. For example, a non-slot with 1 OFDM symbol length may be considered in the frequency range of 6 GHz or more. As another example, a number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7 as a non-slot standard, it is provided as an example only.

Also, for example, an SCS corresponding to $\mu$ = 1 and 2 may be used in the unlicensed band of 6 GHz or less and an SCS corresponding to $\mu$ = 3 and 4 may be used in the unlicensed band above 6 GHz. Here, for example, if $\mu$ = 4, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot of which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although SCS of 480kHz may not be considered in Table 4, the present disclosure is not limited to such examples.

[Table 4]

| SCS | slots in 10ms | slots in 10ms | symbols in 10 ms |
|---|---|---|---|
| 15kHz | 10 | 20 | 140 |
| 30kHz | 20 | 40 | 280 |
| 60kHz | 40 | 80 | 560 |
| 120kHz | 80 | N/A | 1120 |
| 240kHz | 160 | N/A | 2240 |
| 480kHz | 320 | N/A | 4480 |

The V2X service may support a set of basic requirements for V2X services. The requirements are designed basically in sufficient consideration of a road safety service. Here, V2X UE may exchange autonomous status information through a SL. Also, V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and sTTI (Transmission Time Interval). For this purpose, new features may be applied to the V2X communication. More particularly, V2X UE may operate in consideration of coexistence with other V2X UEs. For example, V2X UE may use the same resource pool as other V2X UEs.

For example, technical features may be classified largely based on four categories as represented by the following Table 5 by considering use cases for supporting a V2X service as system aspect (SA) 1, but are not limited thereto. In Table 5, "Vehicles Platooning" may be technology that enables a plurality of vehicles to dynamically form a group and similarly operate. "Extended Sensors" may be technology that enables exchange of data gathered from sensors or video images. "Advanced Driving" may be technology that enables a vehicle to drive based on semi-automation or full-automation. "Remote Driving" may be technology for remotely controlling a vehicle and technology for providing an application. Based thereon, further description related thereto may be given by the following Table 5.

[Table 5]

| |
|---|
| **Vehicles Platooning**<br>Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor**<br>Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| **Advanced Driving** |

(continued)

Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too.

**Remote Driving**

Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements.

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is not limited to following examples. That is, in the LTE V2X system, the present disclosure may apply to an interactable portion.

Here, NR V2X capability may not be limited to essentially support only V2X services and V2X RAT to be used may be selected.

Also, new service requirements for Public Safety and commercial use case for NR V2X services may be considered further in. For example, use case may include, but are not limited to, at least one of more advanced V2X services, public safety services, Network Controlled Interactive Service (NCIS), Gap Analysis for Railways (MONASTERYEND), Enhanced Relays for Energy efficiency and Extensive Coverage (REFEC), and Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. V2X UEs may exchange data and control information (e.g., $2^{nd}$ SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information ($1^{st}$ SL Control Information (SCI)) including $2^{nd}$ SCI indication. That is, a V2X LTE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A LTE may transmit SCI to another UE via PSCCH. Here, the Tx UE may transmit the first SCI ($1^{st}$ SCI, SCI format 1-A) to the Rx LTE via PSCCH. The $1^{st}$ SCI may be used for scheduling the PSSCH and the secondary SCI ($2^{nd}$ SCI) within the PSSCH, and the $1^{st}$ SCI may contain priority information, time/frequency resource allocation information, resource reservation information, Demodulation Reference Signal (DMRS) pattern information, $2^{nd}$ SCI format indicator information, $2^{nd}$ beta-offset indicator information as a parameter for SCI and PSSCH rate matching operation, DMRS port count information, Modulation Coding Scheme (MCS) information, additional MCS table indicator information (e.g. indicating one of the 64 QAM, or 256 OAM or URLLC MCS table), PSFCH overhead indicator information (a parameter for PSSCH rate matching operation with $2^{nd}$ SCI), and at least one of the reserved bits.

Here, for example, the $2^{nd}$ SCI format indicator information may be as shown in Table 6 below. Specifically, if the $2^{nd}$ SCI format indicator information is a two-bit value of "00", it may indicate SCI format 2-A. Also, the $2^{nd}$ SCI format indicator information may indicate SCI format 2-B if the value is "01", and the remaining values may be reserved bits.

However, Table 6 is only one example, and the 2nd SCI format indicator information is not limited to the above example.

[Table 6]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

Also, the Beta-offset indicator information as a parameter for PSSCH rate matching operation with 2nd SCI may be as shown in Table 7 below. The Beta-offset indicator information may be two bits of information indicating the respective indexes provided by the higher layer parameter "sl-BetaOffsets2ndSCI". However, Table 7 is an example, and the Beta-offset indicator information is not limited to the example described above.

[Table 7]

| Value of Beta-offset Indicator | Beta_offset index in Table 9.3-2 of [5, TS38.213] |
|---|---|
| 00 | 1 st index provided by higher layer parameter sl-BetaOffsets2ndSCK |
| 01 | 2nd index provided by higher layer parameter sl-BetaOffsets2ndSCK |
| 10 | 3rd index provided by higher layer parameter sl-BetaOffsets2ndSCK |
| 11 | 4th index provided by higher layer parameter sl-BetaOffsets2ndSCK |

Also, for example, the number of DMRS port information may be as shown in Table 8 below. The Number of DMRS port information is one bit information, and if a value of the number of DMRS port information is "0", it may indicate that antenna port 1000 is used as one antenna port. Also, if a value of the number of DMRS port information is "1", it may indicate that antenna port 1000 and 1001 are used as two antenna ports. However, Table 8 is only one example, and the number of DMRS port information is not limited to the above examples.

[Table 8]

| Value of the Number of DMRS port field | Antenna ports |
|---|---|
| 0 | 1000 |
| 1 | 1000 and 1001 |

Also, the 2nd SCI may be used to provide source ID, destination ID information, PSSCH decryption, and option information related to feedback transmission. Here, if 2nd SCI is SCI format 2-A, 2nd SCI may be the format for the HARQ ACK/NACK feedback option, and if 2nd SCI is SCI format 2-B, 2nd SCI may be the format for HARQ NACK only feedback option. In the case of SCI format 2-A, the 2nd SCI may include at least one of HARQ process number information, New Data Indicator (NDI) information, Redundancy Version (RV) information, source ID information, destination ID information, HARQ feedback enable/disable indicator information, cast type indicator information, and CSI request information.

For example, the cast type indicator information may be as shown in Table 9 below. Here, the cast type indicator information may have a two-bit value, and each value may indicate a broadcast type, a unicast type, and a groupcast type. Here, groupcast may have two types: one that includes ACK or NACK in the HARQ-ACK information, and another that only include NACK in the HARQ-ACK information, The cast type indicator information may indicate each of these types. That is, the cast type information may indicate a broadcast type, a unicast type, a groupcast type that includes ACK/NACK in the HARQ-ACK information, and a groupcast type that includes only NACK in the HARQ-ACK information. However, Table 9 is only one example, and the cast type information is not limited to the above-described example.

[Table 9]

| Value of Cast type indicator | Cast Type |
|---|---|
| 00 | Broadcast |

(continued)

| Value of Cast type indicator | Cast Type |
|---|---|
| 01 | Groupcast when HARQ-ACK information includes ACK or NACK |
| 10 | Unicast |
| 11 | Groupcast when HARQ-ACK information includes only NACK |
| 00 | Broadcast |

Further, in the case of SCI format 2-B, the 2nd SCI may include at least one of HARQ process number information, New Data Indicator (NDI) information, Redundancy Version (RV) information, source ID information, destination ID information, HARQ feedback enable/disable indicator information, zone ID information, and communication range requirement information. The Rx UE may receive the above-described SL control information from the Tx LTE to perform data transmission and reception. Here, the HARQ-ACK feedback for the SL data transmission may be transmitted via the PSFCH, i.e., the PSFCH may be present as a channel for the HARQ feedback. On the other hand, Channel Status Information (CSI), which is the channel status information for the sidelink, may be transmitted over PSSCH, i.e., the channel status information may be transmitted over the data channel.

Here, in one example, the communication range requirement information may comprise four bits, each value indicating a specific range in meters. In one example, the communication rage requirement information may specify {20, 50, 80, 100, 120, 150, 180, 200, 220, 250, 270, 300, 320, 350, 370, 400, 420, 450, 480, 500, 550, 600, 700, 1000, Spare, Spare, Spare, Spare, Spare, Spare, Spare, Spare}; however, this is only one example and the communication.

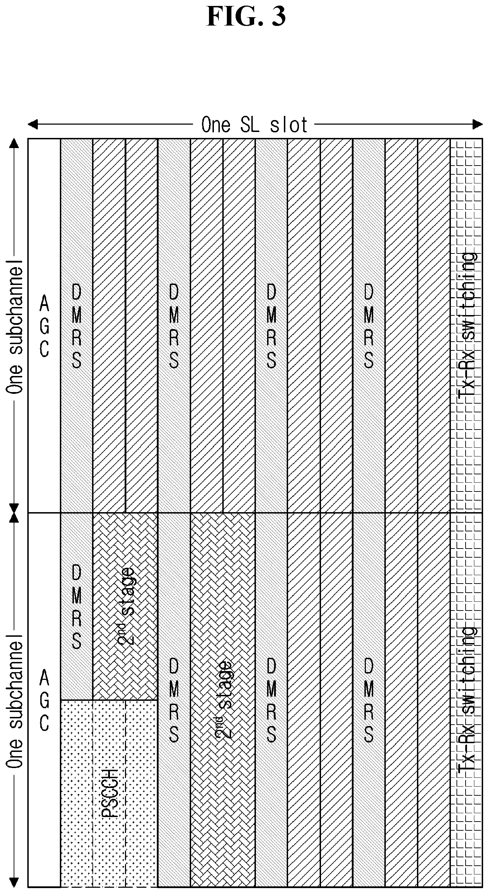

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to remaining OFDM symbols excluding the AGC symbol and the Tx-Rx switching symbol. In detail, locations of PSCCH (1st SCI), 2nd SCI, PSSCH (Data), and DMRS for demodulation may be the same as in FIG. 3, but are not limited thereto. For example, in FIG. 3, PSCCH and 2nd SCI are present in the first subchannel and PSSCH and DMRS may be allocated considering this. As another example, the second subchannel refers to a subchannel in which PSCCH and 2nd SCI are absent and PSSCH and DMRS may be allocated as in FIG. 3.

Here, the number of PSSCH DMRSs may be configured according to a higher layer configuration and one or more PSSCH DMRSs may be configured according to a channel environment of LTE. PSCCH (1st SCI) receives demodulation using DMRS of PSCCH (i.e., PSCCH DMRS) and is equally allocated and transmitted every four resource elements (REs) within a single resource block (RB). On the contrary, 2nd SCI is decoded using PSSCH DMRS.

Also, for example, a single resource pool associated with an NR SL may support frequency division multiplexing (FDM), time division multiplexing (TDM), and spatial divisional multiplexing (SDM). This means that each resource in a single resource pool can be divided and used based on frequency, time, and space, which can increase resource efficiency.

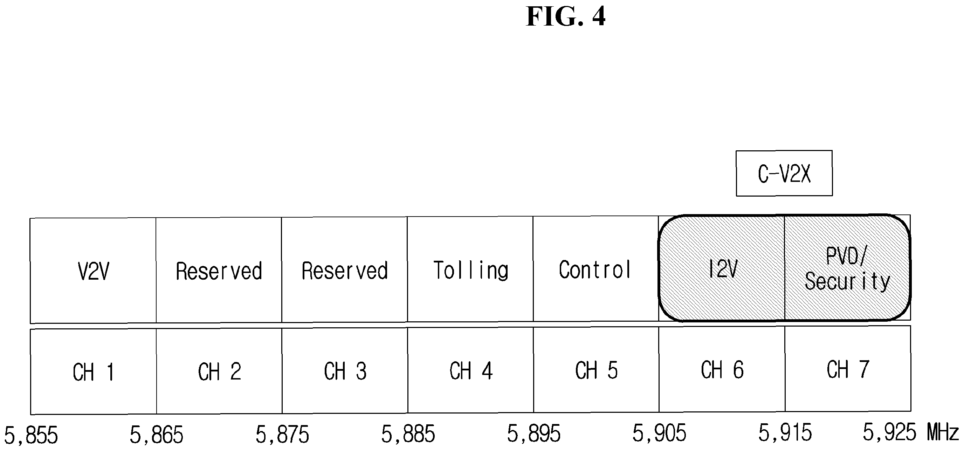

FIG. 4 illustrates an NR SL frequency to which the present disclosure may apply. For example, NR SL may operate based on at least one of Frequency Range 1 (FR1) (sub 6 GHz) and Frequency Range 2 (FR2) (i.e., up to 52.6 GHz), unlicensed ITS bands, and licensed band.

In detail, for example, referring to FIG. 4, 5,855 to 5,925 MHz may be allocated for an ITS service (technology neutral manner).

Also, NR V2X quality of service (QoS) requirements may be considered. That is, delay, reliability, and a data rate may need to be satisfied with predetermined conditions related to requirements for an NR V2X service. Here, the requirements may be configured as in Table 10 below and Table 11 may show PC5 QoS for NR V2X.

Here, to satisfy QoS requirements, access stratum (AS) level QoS management may be required. To this end, HARQ and CSI feedback associated with link adaptation may be required. Also, each of NR V2X UEs may have a different maximum bandwidth capability (max. BW capability). Considering this, AS level information that includes at least one of LTE capability, QoS related information, radio bearer configuration, and physical layer configuration may be exchanged between NR V2X UEs.

[Table 10]

| |
|---|
| - Delay:[3, 100ms] |
| - Reliability :[90%, 99.999%] |

(continued)

- Data rate: up to 1Gbps (TS22.186)

[Table 11]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |
| •NOTE 1: GBR and Delay Critical GBR PQIs can only be used for unicast PC5 communications. | | | | | | | |

(continued)

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. <br> • NOTE 2: The PQIs may be used for other services than V2X. | | | | | | | |

Hereinafter, a SL HARQ procedure is described. Whether V2X LTE is to report HARQ feedback is indicated by higher layer (e.g., RRC) configuration and SCI signaling (e.g., 2nd SCI). For example, if the V2X LTE performs SL communication based on a groupcast, whether to report the HARQ feedback may be determined based on a distance between a Tx UE and a Rx UE.

When the V2X LTE performs at least one of unicast and groupcast transmission, SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit HARQ feedback may be determined based on a physical distance between the Tx UE and the Rx UE. Here, when the HARQ feedback is performed for the groupcast transmission via PSSCH, the Rx UE may send a negative response only when the received PSSCH decoding fails. It may be called by an option 1 operation. Moreover, when HARQ feedback is performed for the groupcast transmission via PSSCH, the Rx LTE may send a positive response or a negative response based on whether PSSCH decoding succeeds and it may be called by an option 2 operation. In the option 1 operation of feeding back only a negative response as NACK only HARQ feedback, if the physical distance between the Tx UE and the Rx UE is less than or equal to communication range requirements, HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx LTE is indicated to the Rx LTE through SCI signaling associated with the PSSCH. The Rx UE may estimate a distance from the Tx UE based on both information included in the received SCI and its location information and may operate as above.

Also, when unicast communication is performed based on V2X, a case in which SL HARQ feedback is enabled may be considered. The Rx UE may generate and transmit HARQ ACK/NACK corresponding to PSSCH depending on whether decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, a SL received signal strength indicator (SL RSSI) is defined as an average value (in [W]) of total received power measured from subchannels configured within OFDM symbols of a slot configured for PSCCH and PSSCH.

Also, the V2X UE may measure a SL Channel busy ratio (SL CBR) in slot n. Here, CBR measurement is performed within CBR measurement window ([$n$-$a$, $n$-1]). The CBR measurement window is configured based on a higher layer parameter value *"timeWindowSize-CBR"* and the above a value has one value of 100 or $100 \cdot 2^\mu$ slots. The CBR measurement refers to a value used to define a ratio of subchannels having an SL-RSSI value exceeding a predetermined threshold among subchannels in the entire resource pool.

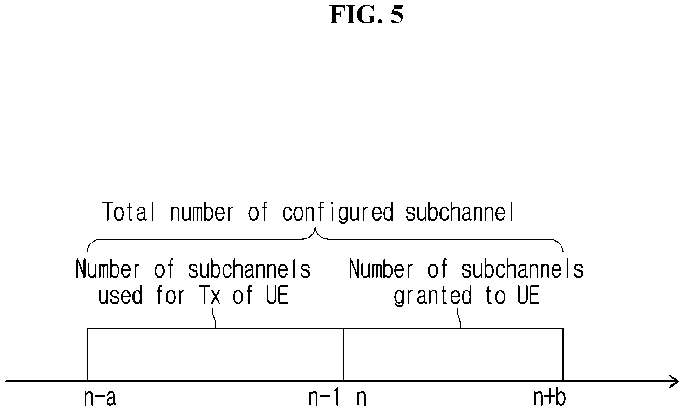

For example, FIG. 5 illustrates a method of measuring a SL Channel occupancy Ratio (CR) to which the present disclosure may apply.

Referring to FIG. 5, V2X may measure a CR in slot n. Here, slots up to [$n$-$a$, $n$+$b$] are slots allowed for the V2X LTE and slots [$n$-$a$, $n$-1] are slots used by the V2X LTE for SL transmission. In slot n, a CR value may be a value acquired by dividing a total number of subchannels in [$n$-$a$, $n$-1] and a total number of subchannels in [$n$, $n$+$b$] by a total number of subchannels configured in a transmission resource pool corresponding to time [$n$-$a$, $n$+$b$].

In detail, a has a positive value at all times in a time section (slots [$n$-$a$, $n$-1]) used for SL transmission. On the contrary, b within time (slots [$n$, $n$+$b$]) for counting the number of subchannels of a resource allowed for UE has a value of 0 or a positive value. Values of a and b are determined to satisfy all the conditions of $a+b+1$ = 1000 or $1000 \cdot 2^\mu$ slots and $b < (a+b+1)/2$ by a UE implementation. As another example, values of a and b are set to use one value of 1000 or

1000·2^μ slots by higher layer parameter *"timeWindowSize-CR"*. Also, a value of n+b should not exceed a last transmission occasion of grant for current transmission. Here, a slot for CBR and CR may be a physical slot and the CBR and the CR may be measured every time transmission is performed.

Also, for example, the Discontinuous Reception (DRX) operation of the UE may be considered. The DRX operation is an operation where a LTE performs discontinuous reception over a period of time to reduce power consumption. The LTE may monitor for paging messages only in a paging occasion based on a paging DRX cycles in the Radio Resource Control (RRC) off state. The LTE may also reduce power consumption by performing PDCCH monitoring in the on-duration based on DRX operation in the RRC connected state.

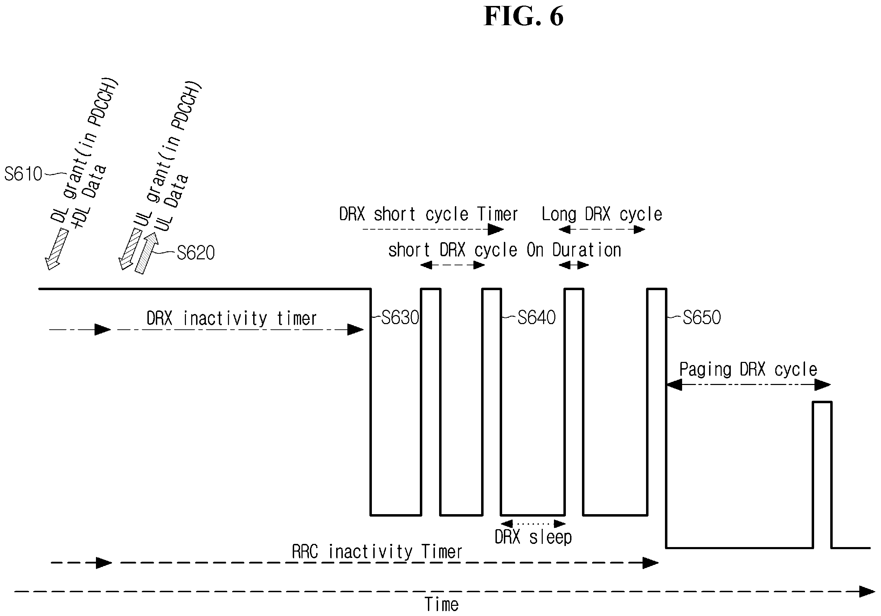

More specifically, referring to FIG. 6, the UE may monitor the PDCCH in the RRC connection state and receive a downlink grant and DL data (S610). Here, when the UE receives the DL grant and DL data, the DRX inactivity timer and the default RRC inactivity timer may be (re)started. That is, The DRX inactivity timer may be used to prevent the UE from transitioning to DRX state to reserve a certain period at the time the UE receives the DL data. Additionally, the RRC inactivity timer may be started at the time the UE receives the DL data to prevent the UE from entering the RRC IDLE state to reserve a period of time.

When the UE receives a UL grant, the DRX inactivity timer and the RRC inactivity timer may be (re)started, and the UE may transmit a UL data.(620) When the UE receives the UL grant and transmits the UL data, DRX inactivity timer may be started to prevent the LTE from switching to the DRX state to guarantee contiguous data transmission and reception during a certain period of time. Also, when the UE receives the LTL grant and transmits the LTL data an RRC inactivity timer may be started to prevent the UE from switching to the RRC IDLE state to secure a certain period of time.

That is, the UE may (re)start the DRX inactivity timer and RRC inactivity timer if a grant for data reception and transmission occurs. Here, if the DRX inactivity timer is executed, the UE may continuously perform PDCCH monitoring. After the DRX inactivity timer and the RRC inactivity timer are started, if no DL grant or LTL grant has occurred in the UE until the timer expires, a short DRX cycle may be started, if a short DRX cycle is configured for the UE. (S630) Further, for example, the short DRX cycle may be started if the UE receives a DRX command and a short DRX cycle is set for the UE. Here, the DRX command may be received via a DRX Command MAC CE, wherein the DRX command MAC CE may be identified via an LCID in the MAC PDU subheader. For example, the short DRX cycle may be set motivated mainly by Voice over Internet Protocol (VoIP) service, but may not be limited thereto.

That is, if the UE receives the DRX Command MAC CE, the on-duration timer and the DRX inactivity timer is suspended, and if a short DRX cycle is configured for the UE, the short DRX cycle timer is started on the set short DRX cycle. On the other hand, if the short DRX cycle is not configured, a long DRX cycle based on the long DRX cycle timer is started. Here, the short DRX cycle timer may be started (or restarted) on the first symbol after reception of a DRX MAC Command MAC CE or on the first symbol after the DRX inactivity timer expires. If a short DRX cycle is started, the LTE may not monitor the PDCCH during the DRX sleep period, but may perform PDCCH monitoring only during the on-duration interval, thereby reducing power consumption. Here, the DRX inactivity timer and the RRC inactivity timer may be restarted if the UE identifies reception of either the DL grant or UL grant through PDCCH monitoring. On the other hand, if no DL grant or UL grant occurs until the short DRX cycle timer expires, the UE may stop the short DRX cycle and then, start the long DRX cycle.(S640) For another example, if the LTE receives the Long DRX Command MAC CE, the on-duration timer and the DRX inactivity timer may be stopped and the long DRX cycle may be started.

Further, for example, each of the short DRX cycle and the long DRX cycle may have a cycle and a DRX start offset (drxStartOffset) value, respectively. Here, a start subframe of the on-duration may be determined based on the DRX start offset from the start of the cycle. DRX A DRX on-duration timer (drx-onDurationTimer) may be started based on the start of the on-duration.

The UE may perform PDCCH monitoring during the on-duration interval while monitoring the PDCCH is not performed during the DRX sleep interval within the long DRX cycle. Here, the RRC inactivity timer may be expired if the UE has not received a DL grant or UL grant after the start of the RRC inactivity timer before the RRC inactivity timer expires. In case the RRC inactivity timer expires, the UE may enter the RRC IDLE state.(S650) At this time, in the RRC IDLE state, the UE may operate based on a paging DRX cycle.

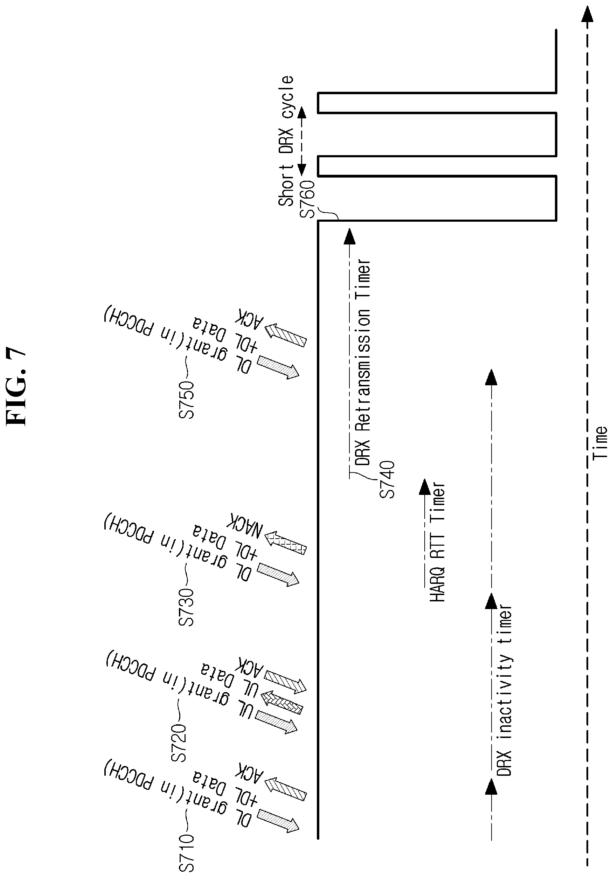

Also, for example, referring to FIG. 7, the LTE may perform a DRX operation considering hybrid automatic repeat request (HARQ) feedback. In detail, the UE in the RRC connection state may receive a DL grant and DL data by performing PDCCH monitoring.(S710) Here, the UE may (re)start the DRX inactivity timer and the RRC inactivity timer. Here, after receiving the DL data, the UE may transmit ACK/NACK information to the base station indicating whether the DL data is successfully received or not. For example, the UE may complete the data reception by successfully receiving the DL data and transmitting an ACK to the base station.

Also, the LTE may receive the LTL grant and then, transmit the LTL data to the base station based on the received UL grant. At this time, the DRX inactivity timer and the RRC inactivity timer may be (re)started.(S720) Thereafter, the base station may transmit ACK/NACK information to the UE indicating whether the UL data transmission is successful or not. For example, the base station may complete the data transmission by successfully receiving the UL data and transmitting an ACK to the UE.

A case in which the UE receives the DL grant but fails to successfully receive the data scheduled by the DL grant due to failure of decoding the DL data may be considered. In this case, the LTE may transmit a NACK to the base station, and data retransmission by a base station may be performed based on the NACK.(S730) Here, the HARQ round trip time timer (HARQ RTT Timer) may start at the first symbol after end of the DL HARQ feedback (NACK) transmission. After the NACK transmission by the UE, the HARQ RTT Timer may be defined for the time interval before the DL HARQ retransmission is performed. The UE may not monitor the PDCCH indicating a retransmission for the corresponding HARQ process while the HARQ RTT Timer is in operation, but may start PDCCH monitoring for reception of a retransmission when the HARQ RTT Timer expires. Also, the DRX retransmission timer may start at the first symbol immediately following the expiration of the HARQ RTT Timer.(S740) The UE may perform PDCCH monitoring while the DRX retransmission timer is in running, and may receive a DL grant scheduling the retransmission. If the UE successfully decodes the DL data based on the DL grant, the UE may transmit an ACK to the base station.(S750) Here, the DL grant for the retransmission data may not restart the DRX inactivity timer described above, and the DRX inactivity timer may expire before the DRX retransmission timer expires. However, if the DRX retransmission timer is running, the UE may not enter the short DRX cycle. On the other hand, the UE may enter the short DRX cycle if the DRX retransmission timer expires.(S760)

Also, for example, if the UE has performed a UL data transmission (i.e., a MAC PDU has been transmitted), the drx-HARQ-RTT-TimerUL starts at the first symbol after the end of the first repetition of the corresponding PUSCH. After that timer expires, the UE may expect to receive a UL grant for retransmitting the PUSCH, in the same HARQ process, may perform the retransmission based on the received UL grant.

Also, for example, the DRX cycle may be synchronized between the UE and the base station (e.g., gNB). That is, the base station may recognize that the UE is in a DRX sleep state or a DRX awake state, and may schedule data transmission for the UE accordingly.

Also, the UE may not perform PDCCH monitoring in DRX sleep state, as described above. Since the base station may recognizes the DRX cycle/state of the UE, the base station may delay the PDCCH transmission until the nearest wake up cycle. Also, for UL transmission, the UE may send a Scheduling Request (SR) in the UL to the base station. For example, even if the UE is in DRX sleep state, when UL data is generated in the UE, the UE may send an SR to the base station in other to receive the UL grant.

Also, for example, in addition to the aforementioned timer and parameters, the MAC layer within the base station (e.g., the gNB MAC) may control the DRX of the UE by transmitting MAC CE DRX commands (e.g., DRX Command MAC CE or Long DRX Command MAC CE), as aforementioned. Also, if the DRX is set in the UE, the same operation may be applied to the set DL/LTL grant as when a MAC PDU is received/transmitted and a PDCCH is received in the active time, respectively.

Also, for example, the base station (e.g., gNB) may control the on-duration time interval through RRC configuration of DRX or instruct to follow a long DRX cycle. As aforementioned, the base station may recognize that DL data transmission may not exist for the UE, and it may prevent the UE from being activated so that the UE reduce the power consumption. Also, for example, if DRX is set in the UE, the active time may include a time when at least one of "drx-onDurationTimer", "drx-InactivityTimer", "drx-RetransmissionTimerDL" and "drx-RetransmissionTimerUL" is operated. Also, the active time may include the time when the "ra-ContentionResolutionTime" is operated. Also, the active time may include a time after the SR is transmitted on a Physical Uplink Control Channel (PUCCH) and is pending. Also, the active time may include a time when the PDCCH for the new transmission indicated according to the Radio Network Temporary Identifier (C-RNTI) is not received after successful reception of the RA for the RA preamble that is not selected by the MAC entity among the Contention Based Random Access preambles (CBRA).

As aforementioned, a DRX operation may be performed, and parameters related to a DRX operation controlled by RRC may be shown in Table 12 below.

[Table 12]

| |
|---|
| - drx-onDurationTimer: the duration at the beginning of a DRX Cycle; |
| - drx-SlotOffset: the delay before starting the drx-onDurationTimer; |
| - drx-InactivityTimer: the duration after the PDCCH occasion in which a PDCCH indicates a new UL or DL transmission for the MAC entity; |
| - drx-RetransmissionTimerDL (per DL HARQ process except for the broadcast process): the maximum duration until a DL retransmission is received; |
| - drx-RetransmissionTimerUL (per UL HARQ process): the maximum duration until a grant for UL retransmission is received; |
| - drx-LongCycleStartOffset: the Long DRX cycle and drx-StartOffset which defines the subframe where the Long and Short DRX Cycle starts; |

(continued)

- drx-ShortCycle (optional): the Short DRX cycle;

- drx-ShortCycleTimer (optional): the duration the UE shall follow the Short DRX cycle;

- drx-HARQ-RTT-TimerDL (per DL HARQ process except for the broadcast process): the minimum duration before a DL assignment for HARQ retransmission is expected by the MAC entity;

- drx-HARQ-RTT-TimerUL (per UL HARQ process): the minimum duration before a UL HARQ retransmission grant is expected by the MAC entity.

Also, for example, in a new radio communication system (e.g., NR), a DRX operation for handling a plurality of SCS may be considered in consideration of the aforementioned Numerology. Also, the short DRX cycle may be selectively configured in consideration of a cyclic transmission traffic service of a short cycle such as Voice of Internet Protocol (VoIP). Also, if the latest data is scheduled Also to the long DRX operation, a short DRX cycle is applied first for a certain period of time (e.g. 20ms for VoIP packet (having per 20ms traffic pattern)), and then a long DRX cycle may be used, but is not limited to the aforementioned example.

Also, for example, the unit of the DRX timer may be configured in ms units in consideration of the presence of a plurality of numerology in the new communication system (e.g. NR). However, this is only an example, and it may be possible for the DRX timer to be set based on another unit, and is not limited to the aforementioned example.

Also, for example, when performing a HARQ retransmission operation in asynchronous HARQ, which is a method of allocating resources at a random time for retransmission, the base station may perform a retransmission to the transport block (TB) in which an error occurs. For example, the timer may correspond to the HARQ RTT Timer. Also, for example, the timer may be started when an error is confirmed in the TB, and is not limited to the aforementioned example.

However, for example, the following may be applied not only to a more advanced NR V2X service, but also to other services based on NR SLs (e.g. public safety, commercial use case (e.g. wearable)). In the following, for convenience of explanation, the more advanced NR V2X service is described based on and is not limited thereto. Here, the NR SL frequency for NR SL operation may include at least one of FR1 (410MHz ~ 7.125GHz), FR2 (24.25GHz ~ 52.6GHz) and a frequency band higher than 52.6GHz. Also, the NR SL frequency for NR SL operation may consider unlicensed ITS bands and licensed ITS bands that may exist in a frequency band lower than FR2 and all frequency bands in which the NR system operates, and is not limited to a specific band.

The NR SL may be applied in consideration of the availability of a radio access interface (e.g. Uu link) between the base station and the UE in a 3GPP NG-RAN network (e.g. LTE (ng-eNB) / NR (gNB)). For example, the base station may provide the UE with related settings for transmitting and receiving NR SL data, NR SL physical resource allocation, NR SL configuration (NR SL configuration, etc.), and other settings related to the NR SL, and the NR SL may consider it. In the following, for convenience of description, ng-eNB or gNB on the NG-RAN network is described as a base station. Also, the base station is not limited to ng-eNB or gNB on the NG-RAN network, and may be another form of wireless communication with the UE. However, in the following, it is described as a base station for convenience of explanation.

Next, the LTE may operate based on an NR SL DRX (hereinafter referred to as NR SL DRX) configuration. For example, an NR SL DRX configuration may be set in a UE performing SL communication. That is, the DRX cycle and active time are configured/determined based on the NR SL DRX configuration between UEs performing data transmission and reception via the SL, and SL communication may be performed based thereon.

Also, the SL UEs may perform NR SL HARQ feedback with consideration of the NR SL DRX configuration. Here, the cast type capable of NR SL HARQ feedback may be at least one of unicast and groupcast. That is, the broadcast type may not require NR SL HARQ feedback.

Also, a common DRX cycle (hereinafter referred to as COD) may be set to enable minimal data transmission and reception between SL UEs in a resource pool in which the NR SL DRX configuration is set. For example, the COD setting may be independently configured per UEs (e.g., per UE, per direction (link)-specific or per peer UEs unicast / groupcast), per resource pool, per quality of service (QoS) class (PC5 QoS Identifier, PQI), per service type (e.g., PSID / ITS-AID) or per logical channel (LCH). Also, in addition to the COD that may be shared by all SL UE, separate NR SL DRX configuration may be additionally configured. Here, the additional NR SL DRX configuration may be configured independently for per some UEs (e.g., per UE, per direction (link)-specific or per peer UEs), per resource pool, per QoS class (PQI), per service type (e.g., PSID / ITS-AID) or per LCH.

That is, the common NR SL DRX configuration or the independent NR SL DRX configuration may be set based on at least one or a combination thereof of Table 13 below. Also, the NR SL DRX configurations shown in Table 13 may be configured in one or more numbers.

For example, the NR SL DRX configurations described below may be applied to at least one or combinations thereof of Table 13 below, and are not limited to a specific configuration. Also, the NR SL DRX cycle configuration may also be provided by one higher parameter included in the NR SL DRX configuration and is not limited to the aforementioned example.

[Table 13]

| |
|---|
| - Per resource pool<br>- Per QoS(PQI or PDB) or per LCH Applied to handle different traffic patterns<br>- Per all cast types<br>- Per each unicast, groupcast session or broadcast e.g., In the case of a UE with a PC5 RRC Connection, the DRX pattern is aligned through PC5 RRC signaling, and the UEs that are not aligned are sorted through another method (e.g. SL, MAC CE)<br>- Per each device (PC5 unicast connection, source ID-Destination ID pair, or Source ID (Source Tx UE))<br>- Per SL Grant (SL HARQ process) |

That is, the NR SL DRX configuration may be configured based on one or more combinations of the setting methods of Table 13, and the NR SL DRX configuration of Table 13 may be applied in the following cases.

NR SL DRX configuration may be provided by the base station for SL UE. For another example, the NR SL DRX configuration may be pre-configured for SL UE. For another example, the NR SL DRX configuration may be configured based on a Tx centric in which the Tx UE provides an NR SL DRX configuration to the Rx UE. For another example, the NR SL DRX configuration may be configured based on the Rx centric that the Rx LTE determines the NR SL DRX configuration and send to the Tx UE. For another example, the NR SL DRX configuration may be configured through negotiation between UEs. In detail, if there is a unicast session connection between the UEs, the NR SL DRX configuration may be determined through negotiation between the Tx LTE and the Rx LTE, through which the Tx LTE and the Rx LTE may perform an NR SL DRX operation based on the same value.

That is, the NR SL DRX configuration may be configured in various ways, and is not limited in a specific way. For an example, Table 14 may be signaling options for configuring NR SL DRX, wherein the NR SL DRX configuration may be indicated.

[Table 14]

| |
|---|
| - Signaling options for SL DRX configurations<br>-Dedicated RRC signaling for RRC Connected mode<br>-SIB for RRC idle/inactive mode<br>-Pre-configuration signaling for OOC<br>-Provided by the higher layer (e.g. V2X layer)<br>- PC5 RRC signaling |

If the NR SL DRX configuration is set in the LTE, the LTE may decide whether to report the PC5 DRX parameter to the base station. The UEs performing SL communication may determine who sets the DRX pattern first, and may determine whether to report the information to the base station. As described above, since the base station may provide various configuration information related to the SL to the UE, there is a need for the NR SL DRX configuration to be reported to the base station. In consideration of the above, the UE may determine whether to report the PC5 DRX parameter to the base station.

Also, for example, the SL DRX active time may include a time to monitor the 1st SL Control Information (SCI) transmitted through a Physical SL Control Channel (PSCCH). Also, the SL DRX active time may additionally include a time to monitor the 2nd SCI (PSSCH) transmitted through the Physical SL Shared Channel (PSSCH).

For another example, the active time may include a periodically reserved resource or a time domain resource allocation for each transport block (TB). For another example, the SL active time may include a time when SL HARQ feedback corresponding to PSSCH reception is transmitted through a Physical SL Feedback Channel (PSFCH). For another example, the active time may include a time for receiving SL HARQ feedback corresponding to the PSSCH transmission through the PSFCH. That is, the SL active time may include a time when active of the LTE is required for SL transmission, and is not limited to the aforementioned example.

For a specific example, the LTE may be configured to perform SL transmission only at the active time and not to perform SL transmission at the inactive time. Also, for example, SL transmission may be possible at both an active time and an inactive time.

If SL transmission is possible only at the active time, the LTE performs transmission only at the active time, so that the power consumption may be reduced, but the congestion level may be increased, and there may be a limit to efficient resource utilization. On the other hand, if SL transmission is possible at both the active time and the inactive time, the power consumption of the UE may increase. Therefore, in consideration of the LTE situation, it is possible to set whether SL transmission is possible only at the active time or at both the active time and the active time.

Also, for example, an NR SL DRX time unit may be defined as an absolute physical time unit (i.e., ms). For another example, the NR SL DRX time unit may be defined as a constant time value based on a logical slot. That is, the NR SL DRX time unit can be defined based on a logical slot without affecting the TDD UL-DL setting. That is, the NR SL DRX time unit can be defined based on a logical slot without affecting the TDD UL-DL setting. The NR SL DRX-related timer and time unit may be set based on the logical slot, and the time based on the following logical slot may be converted to absolute time based on the following Equation 3.

In Equation 3, $P'_{DRXcycle}$ is the number of SL slots in corresponding to ms units in the NR SL DRX cycle ($P_{DRXcycle}$), $P_{DRXcycle}$ is the ms value of the NR SL DRX cycle, and N may be the number of SL slots existing within 20ms (Common TDD-LTL-DL setting). That is, based on the following Equation 3, a logical slot may be converted into an absolute unit of time in ms.

$$[\text{Equation 3}]$$

$$P'_{DRXcycle} = \left\lceil \frac{N}{20ms} \right\rceil \times P_{DRXcycle}$$

A DRX resource pool may be set in consideration of NR SL DRX operation. For example, a dedicated resource pool for transmitting and receiving NR SL DRX UEs may be set as a DRX resource pool. For another example, the DRX resource pool is not segmented, but may be determined by defining some time resources in a general resource pool for PSCCH monitoring. Also, in order to avoid resource pool separation, a UE with NR SL DRX set in an existing resource pool may also be able to operate

Also, for example, parameters as shown in Table 15 below may be provided to a SL UE in which the NR SL DRX configuration is set by default in the RRC layer may be provided to the MAC layer. Here, the parameters of Table 15 may be set in consideration of the DRX parameter Table 11 for the Uu link.

[Table 15]

| |
|---|
| -drx-onDurationTimerSL: the duration at the beginning of a SL DRX Cycle; |
| -drx-SlotOffsetSL: the delay before starting the drx-onDurationTimerSL; |
| -drx-InactivityTimerSL: the duration after the PSCCH(or PSCCH/PSSCH) occasion in which a PSCCH(or PSCCH/PSSCH) indicates a new SL transmission for the MAC entity; |
| -drx-RetransmissionTimerSL (per SL HARQ process): the maximum duration until a SL retransmission is received; |
| -drx-LongCycleStartOffsetSL: the Long SL DRX cycle and drx-StartOffsetSL which defines the subframe where the Long and Short DRX Cycle starts; |
| -drx-ShortCycleSL (optional): the Short SL DRX cycle; |
| -drx-ShortCycleTimerSL (optional): the duration the LTE shall follow the Short SL DRX cycle; |
| - drx-HARQ-RTT-TimerSL: the minimum duration before a SL assignment for HARQ retransmission is expected by the MAC entity; |

Also, the DRX parameters may be configured by at least one or more combination of per UE (e.g., per UE, per direction (link)-specific or per peer UEs transmitting unicast/groupcast), per resource pool, per QoS (Quality of Service) class (PC5 QoS Identifier, PQI), per service type (e.g., PSID / ITS-AID), per LCH (Logical Channel) or per SL Grant (SL HARQ process) as shown in Table 13, and it is as aforementioned. In the following, for convenience of description, the NR SL DRX configuration is referred to as a DRX process, but is not limited to the name.

Here, depending on the configuration of the RRC layer, one or more NR SL DRX groups may be configured including at least some or all of the parameters of Table 15. Each NR SL DRX group may independently set the parameter values included in the corresponding NR SL DRX group. For example, some parameters may not be included in the configured NR SL DRX group and may be applied to all of them in common.

Also, the Uu DRX group and the SL DRX group may be configured independently. However, for example, some parameters may be set in common between the Uu DRX group and the SL DRX group. Also, some parameters between the Uu DRX group and the SL DRX group may be set and adjusted in consideration of the Uu DRX operation and the SL DRX operation.

Specifically, a SL on-duration timer (SL onDuration Timer) and a SL inactivity timer (SL inactivity timer) may be set for each NR SL DRX group. Here, the NR SL DRX group may be a group using an NR SL DRX configuration that is independent of each other. For example, an NR SL DRX group may apply independent NR SL DRX timer settings for each target QoS class (PQIs or set of PQIs), cast type, resource pool, or SL grant.

On the other hand, for example, the SL HARQ RTT Timer (SL HARQ RTT Timer) and the SL retransmission timer may all be applied to a common value regardless of the NR SL DRX group. Alternatively, independent SL HARQ RTT Timer and / or SL retransmission timer values may also be applied for each NR SL DRX group. However, this is only one example, and the common NR SL DRX parameter setting and the independent NR SL DRX parameter setting may be configured differently and are not limited to the aforementioned example.

In view of the foregoing, it may be possible to set a common NR SL DRX parameter or an independent NR SL DRX parameter setting based on all possible combinations of all NR SL DRX parameter configurations that can be configured in the RRC layer, and are not limited to the aforementioned example.

As another example, the NR SL DRX group configuration may be configured independently for a Unicast PC5 connection (UC). Also, the NR SL DRX group configuration may be configured independently for Groupcast (GC). Also, the NR SL DRX group configuration may be configured independently for broadcast (BC). Also, a common NR SL DRX configuration may be provided for at least one of broadcast, groupcast, and unicast before the establishment of a PC5 connection. Also, within a common NR SL DRX configuration, independent NR SL DRX configurations may be included for each or each set of QoS class, service type, LCH. That is, a common NR SL DRX configuration may be provided to an NR SL DRX UE for at least one of the cast type, QoS classes, service types, and LCH, except when optimizing NR SL DRX between two UEs, such as for unicast

Hereinafter, downlink synchronization and uplink synchronization in the NR system will be described.

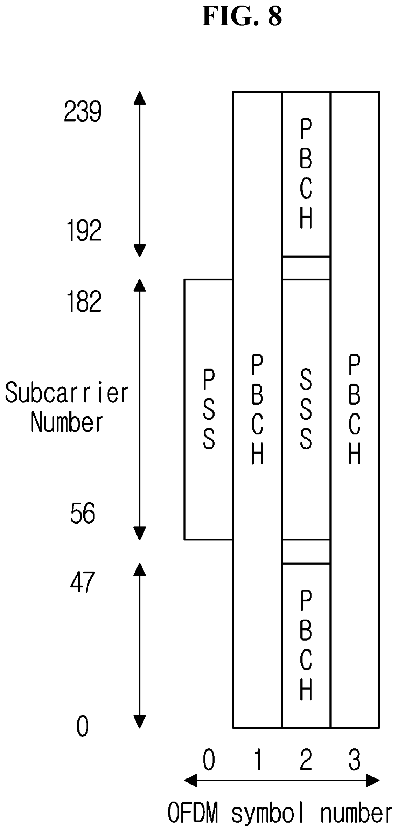

FIG. 8 illustrates the structure of a synchronization signal block to which the present disclosure may apply.

A synchronization signal block (SSB) may include a synchronization signal (SS) and a physical broadcast channel (PBCH). The SS may include a primary SS (PSS) and a secondary SS (SSS), and the PBCH may include a PBCH demodulation reference signal (DMRS) and PBCH data.

Referring to FIG. 8, a single SSB may be defined in units of four OFDM symbols in a time domain and as 240 subcarriers (or REs) in a frequency domain. The PSS may be transmitted in a first symbol and the SSS may be transmitted in a third symbol. The PBCH may be transmitted in second, third, and fourth symbols. In the third symbol, the SSS may be positioned in 127 subcarriers present in the middle, being spaced apart by a guard band from the PBCH and the PBCH may be positioned in low frequency and high frequency directions in remaining subcarriers. In the time domain, the SSB may be transmitted based on a predetermined transmission pattern.

In an initial cell search stage, a LTE may perform downlink synchronization with a corresponding base station by detecting the PSS and the SSS included in the SSB transmitted from a base station. Therefore, the LTE may receive system information transmitted from the base station through a downlink channel.

Uplink synchronization is required such that the LTE may successfully perform uplink transmission to the base station. Although the uplink synchronization is not matched, the UE may attempt the uplink transmission to the base station through a random access procedure and the base station may provide time alignment information (e.g., a timing advance command (TAC) to the corresponding UE based on an uplink signal from the UE.

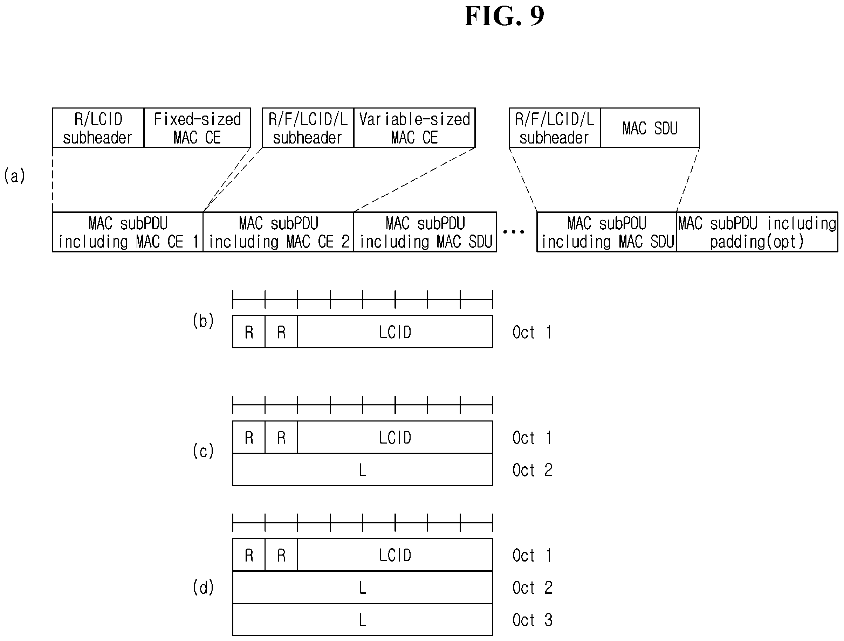

FIG. 9 illustrates a configuration of a medium access control (MAC) protocol data unit (PDU) to which the present disclosure may apply

FIG. 9(a) represents an example in which a single MAC PDU includes at least one MAC subPDU. A single MAC subPDU may include only a MAC subheader, may include a MAC subheader and a MAC service data unit (SDU), may include a MAC subheader and a MAC CE, or may include a MAC subheader and a padding.

(b), (c), and (d) of FIG. 9 illustrate examples of formats of a MAC subheader.

FIG. 9(b) represents a format of a MAC subheader used for a fixed length of MAC CE, a MAC SDU, and a padding . For example, the format of the MAC subheader may be defined as a 1-octet (or 8 bits) size that includes R and logical channel identifier (LCID) fields. A 1-bit R field represents a reserved field and may have a value of 0. A 6-bit LCID field represents a logical channel identifier field. For example, if a value of the LCID field is 62, it may represent a TAC in downlink and may represent a UE contention resolution identity in uplink.

(c) and (d) of FIG. 9 represents a format of a MAC subheader used for a variable MAC CE and MAC SDU. For example, the format of the MAC subheader may be defined as a 2-octet or 3-octet size that includes R, F, LCID, and L fields. The 1-octet or 2-octet L field may have a value that represents a length of the variable MAC SDU or MAC CE as an octet (or byte) unit. A 1-bit F field may have a value that represents a size of the L field. For example, if a value of the F field is 0, it may represent that the size of the L field is 1 octet and if the value of the F field is 1, it may represent that the size of the L field is 2 octets.

As described above, a single MAC subheader may include a single LCID field, a single L field, and a single F field.

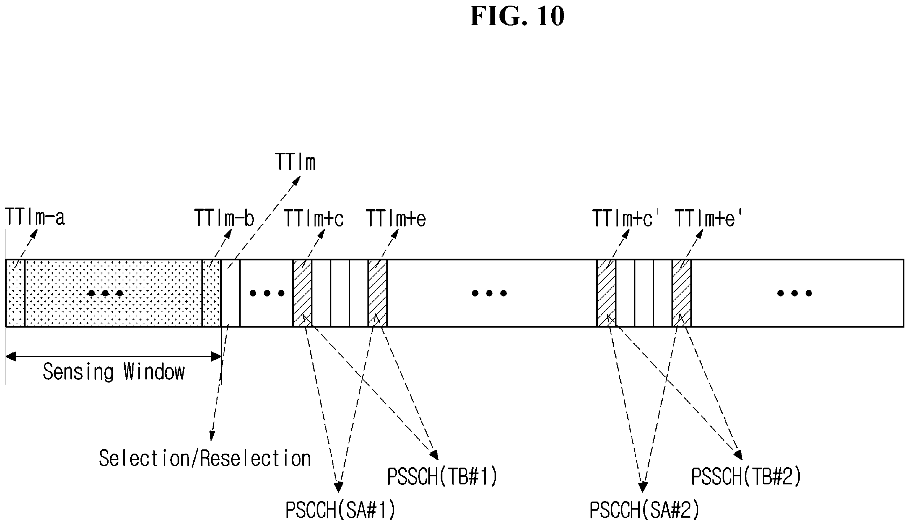

FIG. 10 illustrates an example of a SL transmission slot determination method based on a UE sensing to which the present disclosure may apply.

In the LTE autonomous resource selection mode (or mode 2), a LTE may autonomously determine slots in which the PSCCH for SA and the PSSCH for data are transmitted.

[Table 16]

| Notation related to FIG. 10 | Specific parameter value | Possible actual value (example) | Possible indication method |
|---|---|---|---|
| a | $a=T_0$ | $T_0=1000 \cdot 2^u$ (slots) | (pre-)configured |
| b | $b=T_{proc,0}$ | $T_{proc,0}=1, 2, 3$ or $4$ (slots) | fixed |
| $T_1 \leq c \leq T_2$ | $T_1 \leq T_{proc,1}$ | $T_{proc,1}=3, 5, 9$ or $17$ (slots) | fixed |
| | $T_2 \geq T_{2,min}$ | $T_{2,min}=5 \cdot 2^u, 10 \cdot 2^u$ or $20 \cdot 2^u$ (slots) | (pre-)configured |
| e-c | | $0 \sim 31$ (slots) | indicated by SCI |
| c'-c | $P_{rsvp}$ | $0, 1, 2, ..., 99, 100, 200, 300, ..., 1000$ (ms) | (pre-)configured +indicated by SCI |

FIG. 10 illustrates a method of selecting slots for transmitting a control channel and a data channel by sensing in a resource pool for transmission of the control channel (PSCCH) and the data channel (PSSCH) related thereto.

In a sensing window corresponding to a duration from "TTI m-a" to "TTI m-b", the LTE may verify a resource that has been occupied and used by another LTE through sensing. Based thereon, the UE may select a resource from among remaining resources excluding a resource occupied and used or to be used by the other LTE from resources that belong to the resource pool. That is, sensing a specific resource for resource selection may include referencing whether a resource corresponding to the specific resource is occupied or used within the sensing window (i.e., at a previous point in time based on the specific resource). Since a SL resource allocation may have a periodic characteristic, a resource to be sensed in the resource pool (or a selection window) may correspond to a sensing reference resource within a previous sensing window. For example, when the sensing reference resource within the sensing window corresponding to the resource to be sensed in the resource pool (or the selection window) is used, it may be assumed that the corresponding resource to be sensed in the resource pool (or the selection window) is highly to be occupied or used by the other UE. Therefore, a transmission resource may be selected from the remaining resources excluding the corresponding resource from the resource pool. Therefore, the UE may perform transmission of the control channel and/or the data channel on the selected resource.

Also, "TTI m" corresponding to a time at which the UE determines a selection/reselection corresponds to a time at which a corresponding TB arrives (i.e., a TB generated in a higher layer of the UE arrives at a physical layer).

In detail, it may be expressed as $a=To$ and may be expressed as $b=T_{proc,0}$. Here, a length of the sensing window corresponding to a duration from "TTI m-a" to "TTI m-b" may be expressed as a-b+1. For example, $a=T_0=1000 \cdot 2^u$ and $b=T_{proc,0}=1$. Here, the sensing window corresponds to a duration from slot "TTI m-1000 - $2^u$" to slot "TTI m-1" and the length of the sensing window (corresponding to "a-b+1=$T_O$-$T_{proc,0}$+1=$T_O$-1+1=$T_O$") corresponds to $1000 \cdot 2^u$ slots and thus, may be 1000ms. Although 1000ms corresponding to $T_O=1000 \cdot 2^u$ slots is used as an example above, it is provided as an example only and 1100ms or 100ms is possible. Here, $T_O$ is (pre-)configured as one of the aforementioned values and a value fixed to $T_{proc,0}=1$ may be used.

"TTI m+c" may correspond to a TTI for transmission of SA#1 (first SA) (or, if a single TTI corresponds to a single slot, a slot for transmission of SA#1 (first SA)). "TTI m+d" may correspond to a TTI for initial transmission of TB#1 (first TB) that is instructed by SA#1 (first SA) and transmitted (or if a single TTI corresponds to a single slot, a slot for initial transmission of TB#1 (first TB)). "TTI m+e" may correspond to a TTI for retransmission of TB#1 (first TB) that is instructed by SA#1 (first SA) and transmitted (or, if a single TTI corresponds to a single slot, a slot for retransmission of TB#1 (first TB)).

In the example of FIG. 10, since it is considered that SA and data are transmitted in the same slot in V2X, c=d.

Here, after initial transmission in "TTI m+c", only retransmission in "TTI m+e" is mentioned. However, retransmission may be performed up to three times by a value of $N_{max}$. For example, if $N_{max}=1$, only the initial transmission in "TTI m+c" may be present. If $N_{max}=2$, the initial transmission in "TTI m+c" and the retransmission in "TTI m+e" may be present. If $N_{max}=3$, the initial transmission in "TTI m+c", the retransmission in "TTI m+e", and, although not illustrated, retransmission in "TTI m+f" may be present.

"TTI m+c'" may correspond to a TTI for transmission of SA#2 (second SA) (or, if a single TTI corresponds to a single slot, a slot for transmission of SA#2 (second SA)). "TTI m+d'" may correspond to a TTI for initial transmission of TB#2 (second TB) instructed by SA#2 (second SA) and transmitted (or, if a single TTI corresponds to a single slot, a slot for initial transmission of TB#2 (second TB)). "TTI m+e'" may correspond to a TTI for retransmission of TB#2 (second TB) that is instructed by SA#2 (second SA) and transmitted (or, if the single TTI corresponds to a single slot, a slot for retransmission of TB#2 (second TB)).

In the example of FIG. 10, since it is considered that SA and data are transmitted in the same slot in V2X, c'=d'.

Here, referring to Table 16, $T_1 \leq c \leq T_2$, $T_1 \leq T_{proc,1}$, and $T_2 \geq T_{2,min}$. Here, if u=0, 1 (i.e., if SCS=15kHz, 30kHz), it may be fixed to a value corresponding to $T_{proc,1}$=3 slots. Also, if u=2, 3 (i.e., if SCS=60kHz, 120kHz), it may be fixed to a value corresponding to $T_{proc,1}$=4 slots. Also, $T_{2,min}$ may be (pre-)configured as a value corresponding to $5 \cdot 2^u$, $10 \cdot 2^u$, or $20 \cdot 2^u$ slots.

Also, a value of "e-c" corresponding to a duration between initial transmission and retransmission of the same TB may be indicated through SCI as a value corresponding to 0, 1, 2, ..., 31 slots. If the value is zero, it indicates that there is no retransmission after the initial transmission. If the value is $N_{retransmission} \in \{1, 2, ..., 31\}$, it may indicate that retransmission of the same TB is present after $N_{retransmission}$ slots from the initial transmission.

In detail, resources for the initial transmission and the retransmission of the same TB may be defined within a W duration and, here, W corresponds to 32 slots. That is, within the W duration corresponding to 32 slots starting from slot "TTI m+c" corresponding to the initial transmission to "TTI m+c+31", 0, 1, or 2 retransmissions are possible according to the aforementioned value of $N_{max}$ after the initial transmission. Specifically, in which slot each corresponding retransmission is performed among 32 slots may be indicated through SCI. If $N_{max}$ =2, the retransmission is possible in corresponding "TTI m+e" after $N_{retransmission} \in \{1, 2, ..., 31\}$ slots from "TTI m+c".

Also, it may be expressed as d'=d+P*j (since c=d and c'=d', c'=c+P*j) and thus, it may be expressed as d'-d=c'-c=P*j. Here, P denotes a resource reservation interval.

A value of P may be determined by higher layer signaling. In this case, the value of P may correspond to one of values corresponding to 0, 1, 2, ..., 99, 100, 200, 300, ..., 1000ms. In the transmitting UE, the value of P may be expressed as $P_{rsvp\_TX}$, and in the receiving UE, the value of P may be expressed as $P_{rsvp\_RX}$. In this case, $P_{rsvp\_TX}$ and $P_{rsvp\_RX}$ may be values in ms unit and if they are converted to logical value in slots, they may be expressed as $P'_{rsvp\_TX}$ and $P'_{rsvp\_RX}$.

Here, j may be determined through carrier-specific network configuration or pre-configuration used for V2X within the range of [0, 1, ..., 10]. Also, a single value among values selected for j may be selected and indicated through a signaling field "Resource reservation" of SCI included in SA. Here, j=0 indicates that a value of d' is absent, that is, that a resource reservation is absent after a TTI corresponding to "P*j" from "TTI m+d" for transmission of TB#2 (second TB).

A meaning of "indicated by SCI" in Table 16 includes that, in the case of the UE autonomous resource selection mode (or mode 2), a transmitting LTE (or a first LTE) autonomously determines a corresponding parameter value and then uses a parameter to be used for Table 16 based on the determined value and instructs a receiving UE (second LTE) through SCI such that the receiving LTE (or the second LTE) may know the determined value.

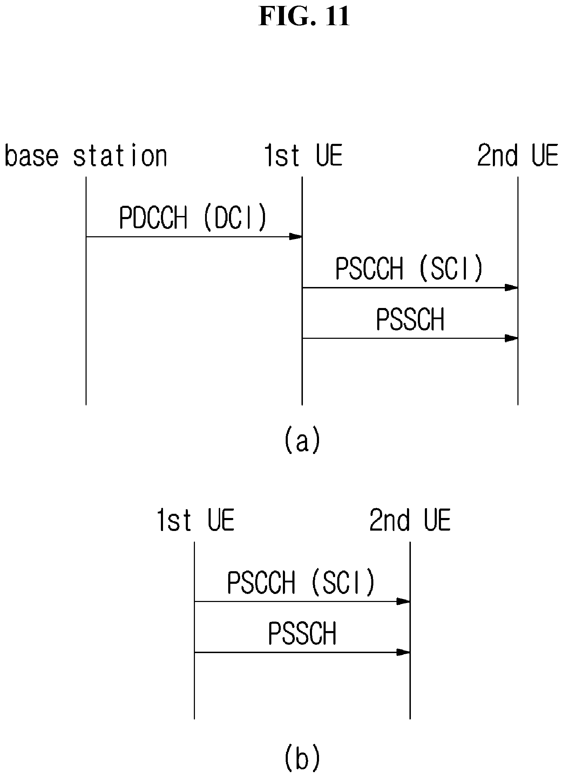

FIG. 11 illustrates a V2X resource allocation method to which the present disclosure may apply.

As described above, in the BS resource scheduling mode (or mode 1), a slot in which SA is transmitted may be a first slot included in a set of the resource candidates that may be used for V2X on a V2X carrier (or band) among slots after Ams (here, A=4, but not limited thereto) from a slot in which the BS transmits DCI. Here, information about a resource block that is a frequency axis resource used for transmission of the SA within the slot in which the SA is transmitted may be indicated through the DCI.

Also, in the BS resource scheduling mode (or mode 1), the DCI includes contents related to the SCI included in the SA as information required for the LTE to transmit data in V2X communication. The DCI is transmitted from the BS to the UE.

Here, a first UE may determine SL scheduling information based on the DCI and may generate the determined SL scheduling information as first SCI and second SCI. The first LTE may transmit the first SCI to a second LTE through a PSCCH and may transmit the second SCI to the second UE through a portion of available PSSCH transmission resources. The second LTE may identify a SL resource through which the first UE is to transmit SL data through a PSSCH based on the first and second SCI received from the first UE. The second UE may receive the SL data from the first UE through the PSSCH on the identified resource.

Meanwhile, in the UE autonomous resource selection mode (or mode 2), the UE autonomously determines a slot in which the SA is transmitted within the resource pool through sensing and a resource block that is a frequency axis resource used for transmission of the SA within the slot in which the SA is transmitted may be autonomously determined by the UE within the resource pool. Therefore, dissimilar to the BS resource scheduling mode (or mode 1), in the UE autonomous resource selection mode (or mode 2), the LTE autonomously determines a resource without separately receiving signaling fields related to resource scheduling included and thereby indicated in the DCI.

Also, in the UE autonomous resource selection mode (or mode 2), the contents related to the SCI included in the SA as information required for the LTE to transmit data in V2X communication is autonomously determined by the UE. Therefore, dissimilar to the BS resource scheduling mode (or mode 1), in the UE autonomous resource selection mode (or mode 2), the LTE performs autonomous determination without separately receiving signaling fields related to the SCI included and thereby indicated in the DCI.

Here, the first LTE may autonomously determine SL scheduling information and may generate the determined SL scheduling information as first SCI and second SCI. The first UE may transmit the first SCI to the second UE through the PSCCH and may transmit the second SCI to the second UE through a portion of available PSSCH transmission resources. The second LTE may identify a SL resource through which the first UE is to transmit SL data through the PSSCH based on the first and second SCI received from the first UE. The second UE may receive the SL data from the first UE through the PSSCH on the identified resource.

That is, there is a difference in that the SCI included in the SA as information required for the UE to transmit data is scheduled by the BS in the BS resource scheduling mode (or mode 1) and autonomously selected by the UE in the UE autonomous resource selection mode (or mode 2). However, in both of the BS resource scheduling mode (or mode 1) and the LTE autonomous resource selection mode (or mode 2), the SCI included in the SA is required for a data receiving UE (the receiving UE or the second LTE) recto decode data transmitted from a data transmitting UE (the transmitting UE or the first UE). Therefore, the data transmitting UE (or the first UE) needs to transmit the SA including the SCI to the data transmitting LTE (or the second LTE).

As described above, in V2X, particularly for V-UE, a sensing-based resource selection method is described above with reference to FIG. 10.

Dissimilar to vehicle-to-vehicle (V2V) that considers V-UE, additional energy saving may be considered in vehicle-to-pedestrian (V2P) that is transmitted from V-LTE to pedestrian-user equipment (P-UE) or pedestrian-to-vehicle (P2V) that is transmitted from P-UE to V-UE. That is, although the V-UE may not consider a power limitation situation as the LTE that is included in the vehicle, the P-LTE is a LTE of a pedestrian with limited battery power and thus, needs to consider the power limitation situation.

Therefore, for V-UE, a sensing-based resource selection method (hereinafter, a full sensing method) may be applied to all of resources within a specific duration (e.g., 1000ms corresponding to a duration from "TTI m-a" to "TTI m-b"). Meanwhile, for P-UE, a sensing-based resource selection method (hereinafter, a partial sensing method) is required with respect to some resources within a specific duration (e.g., 1000ms corresponding to the duration from "TTI m-a" to "TTI m-b") to save power consumption.

A case in which the P-UE transmits SL control information and data to the V-UE (corresponding to a case in which V2P communication is performed and a case in which the V-UE, such as a vehicle, acquires information about the P-UE, such as a pedestrian, and prepares for safety matters) may be considered. On the contrary, a case in which the P-LTE does not receive the SL control information and the data from the V-UE (corresponding to a case in which V2P communication is not performed and a case in which the V-LTE, such as a vehicle, does not need to acquire information about the P-UE, such as a pedestrian, and to prepare for safety matters) may be considered. In the case of considering a case of supporting devices lacking such SL reception capabilities, a random-based resource selection method (hereinafter, a random resource selection method) is also required for the P-UE.

Although the resource selection method for the P-LTE that considers power limitations may require the partial sensing method, a detailed operation related thereto is not defined so far. Also, a detailed configuration method is not defined so far with respect to the resource pool for the P-LTE that considers power limitations.

Also, although the random resource selection method may need to be applied to the resource selection method for the P-UE lacking the SL reception capability, a detailed operation related thereto is not defined so far. Also, a detailed configuration method is not defined so far with respect to the resource pool for the P-UE that lacks the SL reception capability.

The partial sensing-based resource pool for P-LTE (particularly, a slot pool corresponding to a time domain resource) may be defined based on the full sensing-based resource pool for V-UE (particularly, the slot pool corresponding to the time domain resource). That is, the full sensing method and the partial sensing method may simply differ in terms of a sensing window size and may perform a similar sensing-based operation, which may lead to simplifying complexity.

Meanwhile, the random resource selection-based resource pool for P-LTE (particularly, the slot pool corresponding to the time domain resource) may be independently defined from the full sensing-based resource pool for V-LTE (particularly, the slot pool corresponding to the time domain resource). When the resource pool for P-LTE (particularly, the slot pool corresponding to the time domain resource) is independently configured, the performance of the P-UE may be improved compared to sharing the resource pool (particularly, the slot pool corresponding to the time domain resource). That is, since a random resource selection-based resource for P-UE is independently configured without being affected by other resources (e.g., a partial sensing-based resource for P-LTE and/or a full sensing-based resource for V-UE), the performance of the P-UE may be improved.

On the other hand, the random resource selection-based resource pool for P-LTE (particularly, the slot pool corresponding to the time domain resource) may be defined by sharing the full sensing based-resource pool for V-LTE (particularly, the slot pool corresponding to the time domain resource). This is to prevent a decrease in resources available for V2V when configuring an independent resource for the P-UE, thereby affecting the performance of V2V. Also, since a single pool is used through sharing, it is possible to more efficiently use resources without wasting resources.

Here, the random resource selection-based resource pool for P-UE (particularly, the slot pool corresponding to the time domain resource) and the partial sensing based-resource pool for P-LTE (particularly, the slot pool corresponding to the time domain resource) may be distinguished from each other with mutual orthogonality. This is to ensure that resources used by partial sensing-based P-UEs do not interfere with random resource selection-based P-UEs.

For example, the existing NR SL (e.g., Rel. 16 NR SL) was developed to support V2X, mainly related to road safety services. There may be out-of-coverage (OoC) and in-coverage (IC) scenarios based on network coverage. NR SL may operate based on at least any one of broadcast, groupcast, and unicast communication in in-coverage (IC).

However, in the new NR SL, SL is required to be improved not only for V2X and public safety services, but also for commercial services. To this end, in the NR SL enhancement (NR SL), the NR SL DRX operation may be considered to reduce power consumption, as described above. For example, in the existing NR SL (e.g. Rel. 16 NR SL) system, the LTE may operate based on the case that the LTE is always-on for SL operation when the battery is sufficient. However, in the new NR SL (e.g., Rel. 17 NR SL), there is a need to provide necessary functions for vulnerable road users (VRUs) such as pedestrians, bicycles, motorcycles, and people with reduced mobility who use commercial services, as well as V2X and public safety. That is, in the new NR SL, SL operation of UEs with limited power may be required, and there is a need to satisfy the requirements for this.

In view of the aforementioned, the new NR SL may support SL discontinuous reception (SL DRX) functions in broadcast, groupcast, and unicast. Through this, On- and Off-durations are set to the UE, and the UE may operate based on the set NR SL DRX configuration. Here, a synchronization method for a UE in which SL DRX is set may be required. In addition, the UE in which the SL DRX is set needs to operate by performing synchronization with a LTE set with the DRX on the Uu link. In addition, the UE in which the SL DRX is set needs to operate in consideration of the SL DRX when selecting a resource, and the following describes it.

If the resource allocation mode 1 is configured in the UE, the UE may receive resource allocation information for SL communication from the base station and allocate resources based thereon. On the other hand, if resource allocation mode 2 is configured in the UE, the UE may directly select a resource from the resource pool. For example, a UE in which resource allocation mode 2 is set may generate a SL grant (SL grant) according to a plurality (or single) MAC PDU transmission. Here, if the transmitting LTE transmits a plurality of MAC PDUs, the transmitting LTE selects at least one period of the resource reservation period list (sl-ResourceReservePeriodList) set by the higher layer, and based thereon, MAC PDU transmission may be performed. On the other hand, if the transmitting UE transmits one MAC PDU, the transmitting UE may perform one MAC PDU transmission without setting a resource reservation period. That is, depending on whether a plurality of MAC PDUs is transmitted, there may be different settings for the resource reservation period of the SL grant.

In addition, when the UE in resource allocation mode 2 is set transmits data, the UE may select one of the number of retransmissions (sl-MaxTxTransNumPSSCH) set through higher-layer signaling. In addition, the UE in resource allocation mode 2 may determine the number of frequency resources based on the minimum number of subchannels (sl-MinSubChannelNumPSSCH) and the maximum number of subchannels (sl-MaxSubchannelNumPSSCH) set through higher layer signaling.

In addition, the UE in resource allocation mode 2 may receive resources from the physical layer based on the method of FIG. 10. Specifically, if the UE receives resources from the physical layer, the LTE may perform sensing based on the method of FIG. 10. Here, sensing may be used as at least one of the whole sensing method and the partial sensing method. For example, the whole sensing method and the partial sensing method differ only in the size of the sensing window, but can simplify complexity by performing similar sensing-based operations. Here, the UE may identify the resources occupied and used by other UEs through sensing. The UE may select a specific resource from the remaining resources excluding resources occupied and used by other UEs among resources in the resource pool. For example, in FIG. 10, the UE may exclude TTI m + c, TTI m + e, TTI m + c ' and TTI m + e ', and may perform transmission of control channels and data channels on the remaining resources. For example, if one TTI represents one slot to which the bitmap is applied above, the TTI may be P*j slots. In addition, TTI m + e and TTI m + e ' may have the same difference as many as P*j TTIs(or P*j slots). Here, for example, P may mean a resource reservation interval.

As a specific example, the P value may be determined by higher layer signaling.

In this case, the P value may be one of the values corresponding to 0, 1, 2, ..., 99, 100, 200, 300, ..., 1000 ms. For example, in the transmitting UE, the value of P may be expressed as $P_{rsvp\_TX}$, and in the receiving UE, the value of P may be expressed as $P_{rsvp\_RX}$. In this case, $P_{rsvp\_TX}$ and $P_{rsvp\_RX}$ may be values in ms unit. If they are converted to logical value in slots, they may be expressed as $P'_{rsvp\_TX}$ and $P'_{rsvp\_RX}$. In this case, j may be one of the values selected by carrier-specific network configuration or pre-configuration for each carrier (or band) used for V2X within the range of [0, 1, ..., 10]. Here, j may be selected and indicated through a "Resource reservation" signaling field of the SCI included in the SA, but is not limited to the aforementioned example.

The LTE may select a resource among the resources belonging to the resource pool except for the resources occupied and used by other LTEs. That is, the LTE performs sensing on the sensing window based on the aforementioned, perform data transmission by excluding TTI m + c and TTI m + e among resources occupied and not used by other UEs, and by selecting a resource among the remaining resources.

The LTE may determine a threshold value for resource exclusion after performing sensing as described above. Thereafter, the UE may identify the set $S_A$ of a candidate single slot resources. Here, the $S_A$ may be a set of all possible candidate single-slot resources. For example, a candidate single-slot resource may be expressed as $R_{x,y}$. y is a slot y, and x may correspond to a frequency axis resource in slot y. Thereafter, the UE may exclude slots that satisfy certain conditions for all possible y values among the resource pool in the sensing interval. That is, the UE may exclude resources that can be used by other UEs by performing monitoring of all possible y values in the resource pool in the sensing interval.

Here, for example, if the LTE fails to perform monitoring (i.e., skips sensing) in slot m, the UE may exclude, from slot m, transmitting resources of potential data having a $P_{rsvp\_RX}$ period which may be overlapped with reception of data having $P_{rsvp\_TX}$ period. As a specific example, if the UE performs data transmission in slot m in the sensing window, the LTE may not perform monitoring in slot m. That is, the LTE may not perform sensing in slot m. Since it may be uncertain whether resources are used for resources based on slot m, the UE may exclude, from slot m, transmitting resources of potential data having a $P_{rsvp\_RX}$ period which may be overlapped with reception of data having $P_{rsvp\_TX}$ period.

Thereafter, if the UE excludes slots satisfying certain conditions for all possible y values among the resource pool in the sensing interval, the UE may identify SCI exceeding threshold values among the received SCIs.

Specifically, the UE may receive SL control information (SCI) in each slot. In this case, the LTE may identify SCIs exceeding a threshold value among the received SCIs. For example, the resource reservation field and the priority field in the SCI received by the UE may indicate $P_{rsvp\_RX}$ and $prio_{RX}$ values. In this case, if the LTE receives SCI in slot m, the UE may determine whether the PSSCH-RSRP measurement value corresponding to the received SCI exceeds the threshold value, $Th(prio_{RX})$. That is, the UE may identify whether the corresponding slot m is used by another UE. Based on the SCI received in slot m, the UE may identify whether resources that can be scheduled for transmission from slot y and slot y thereafter overlaps with resources that are scheduled to be transmitted periodically thereafter from slot m. In this case, if the resources overlap, the LTE may exclude the corresponding resource. Here, slot m is $t^{SL}_m$, and resources that may be scheduled for transmission thereafter from slot y and slot y may be $R_{x,\,y\,+\,jx \cdot P'rsvp\_TX}$, and their resources may be compared.

That is, the UE may exclude y already reserved by the other UEs among all possible y values among the resource pools in the sensing interval based on SCIs exceeding the threshold value. That is, the UE may exclude potential data transmission resources having a $P_{rsvp\_TX}$ period that may overlap with the reception of data having $P_{rsvp\_RX}$ period from slot m. Thereafter, after excluding the resource, the UE may identify whether the number of candidate single-slot resources in the SA is less than $X \cdot M_{total}$. In this case, if the number of candidate single-slot resources in the $S_A$ is less than $X \cdot M_{total}$, the UE may perform resource exclusion for all possible y values among the resource pool in the sensing interval by increasing the threshold value by 3dB. Here, $M_{total}$ may be the number of all candidate single slot resource. Also, for example, one of X = 0.2, 0.35, and 0.5 may be set by a higher-end signaling value. Thereafter, the UE may report the $S_A$ to the higher layer. Here, the resources used by each LTE for V2X data transmission may be determined based on the above-described reporting value.

Based on the above, the UE may be indicated to a plurality of resources. In this case, the LTE may randomly select a time/frequency resource for a transmission opportunity of one of the indicated plurality of resources. Here, if the transmitting LTE randomly selects the time/frequency resource, the transmitting UE may randomly select the time/frequency resource in consideration of the packet delay budget (PDB) and the number of frequency resource for the SL data, which will be described later.

In addition, for example, if the UE randomly selects a time/frequency resource, the UE may need to perform resource selection in consideration of the SL DRX operation, which will be described later.

In addition, for example, the UE may use a randomly selected frequency/time resource for PSCCH/PSSCH transmission based on the resource reservation period. For example, if one or more retransmissions are set in the UE, the UE may randomly select a time/frequency resource among the remaining resources indicated by physical layer in consideration of at least one of the selected amount of frequency resources, the number of HARQ retransmissions, and the PDB for SL data.

In addition, there is a need to ensure a minimum time gap between two resources randomly selected by the UE for retransmission. Here, the minimum time gap is the time gap between the last symbol of the PSSCH transmission and the first symbol for receiving the PSFCH associated with it, and may be defined through "MinTimeGapPSFCH" and "periodPSFCHresource". For example, the minimum time gap may include time for PSFCH reception/processing, multiplexing, and retransmission preparation time such as Tx-Rx switching time. In addition, if the UE selects a SL grant transmission for one MAC PDU transmission, other than the method for selecting a resource reservation, the other procedures may be applied to the UE as the same as described above, and is not limited to the above-described example.

The UE operating based on the resource allocation mode 2 may perform resource selection in consideration of the SL DRX operation. For example, if the LTE on which the SL DRX is set selects a resource without considering the SL DRX, the UE may be an inactive state in the allocated resource, based on the SL DRX, thereby packet loss and delay may occur.

Here, the MAC layer of the UE may perform resource selection in consideration of the SL DRX. More specifically, as described above, the transmitting UE may be indicated available resources in a resource selection window by the physical layer based on the sensing, and may randomly select resources from among a plurality of resources instructed. In this case, if the transmitting UE randomly selects a resource, the transmitting LTE may select a time resource from the time excluding the on-duration time of the receiving LTE. In addition, since the transmitting LTE performs SCI monitoring at the on-duration of the transmitting UE, the time resource may be selected according to a half-duplex constraint. Accordingly, the following describes a method of selecting a resource in consideration of a case in which the transmitting LTE fails to select a resource by on-duration (or DRX).

For example, the MAC layer of the UE may receive an available resource indicated by physical layer as legacy. Thereafter, the MAC layer of the UE may select a resource in consideration of at least one of the amounts of selected frequency resources, PDB of the SL data of the logical channel and the number of HARQ retransmissions. Here, the MAC layer of the UE may select a resource in consideration of at least one of the elements of Table 17 below in consideration of the SL DRX operation. For example, the MAC layer of the UE may select resources in consideration of at least one of the active time of the receiving UE (Rx-UE active time), an on-duration of the receiving UE (Rx-UE on-Duration), an active time of the transmitting UE (Tx-UE active time), an on-duration of the transmitting UE (Tx-UE on-Duration) and an on-duration of the transmitting/receiving LTE (Tx-Rx LTE on-Duration).

[Table 17]

| |
| --- |
| -Rx-UE active time |
| -Rx-UE on-Duration |
| -Tx-UE active time |
| -Tx-LTE on-Duration |
| - Tx-Rx LTE on-Duration |

For example, a SL logical channel may be associated with a UE pair (e.g., source/destination pair). Accordingly, the SL grant of the logical channel in which SL data is generated may be generated in consideration of the NR SL DRX operation of the receiving UE (or destination UE). Here, if the transmitting UE randomly selects time and frequency resources among the available resources indicated in the physical layer of the transmitting UE, the transmitting UE may select time and frequency resources in the off-duration interval of the receiving LTE (or destination LTE). At this time, since the receiving UE is in a sleep state in the off-duration interval, the SCI transmitted by the transmitting LTE cannot be monitored and the transmission may fail.

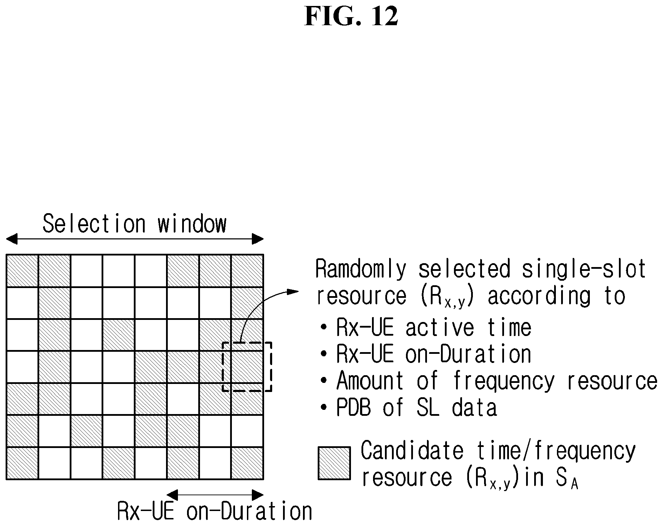

Therefore, if the transmitting UE performs resource selection to successfully transmit SCI to the receiving UE, the transmitting UE need to consider the SL DRX configuration information of the receiving UE. More specifically, the transmitting UE may select a available time/frequency resource (Candidate time/frequency resource) in the resource set ($S_A$) indicated by the physical layer as described above. Here, the time/frequency resource may be $R_{x,y}$ (Candidate single-slot resource), which is described above. Specifically, FIG. 12 may show a method of randomly selecting a resource among available time/frequency resources in a resource selection window. In this case, if the MAC layer of the transmitting LTE performs a procedure for transmitting a SL grant associated with a plurality (or single) of MAC PDU transmissions to the receiving LTE, the transmitting LTE may randomly select time/frequency resource from the set of available resource ($S_A$) indicated by the physical layer in consideration of SL DRX configuration information of the receiving UE (or the destination UE) associated with the logical channel. Here, the SL DRX configuration information for the receiving LTE may be set in at least one combination of the items in Table 18 below, but this is only one example and is not limited to the above-described example.

That is, if the transmitting UE randomly selects a time/frequency resource from a set of available resources ($S_A$) indicated by the physical layer, the transmitting UE may randomly select time/frequency resource in further consideration of at least one of the active time of the receiving LTE, the on-duration of the receiving LTE, the amount of frequency resource, the number of HARQ retransmissions (Optional), and the PDB of the SL data.

In this case, the transmitting UE may randomly select a resource from the resources corresponding to the on-duration interval of the receiving UE based on the SL DRX configuration in the indicated set of available resources ($S_A$). In addition, for example, referring to Table 18 below, the on-duration interval as the active time of the receiving LTE may be indicated by at least one combination of an on-duration period, an on-duration timer, and a slot for on-duration, and is not limited in a particular way.

[Table 18]

| |
| --- |
| - Receiving UE active time or on-duration cycle + on-duration timer |

(continued)

- Receiving UE active time or on-duration SL slot ( $t_m^{SL}$ ) + on-duration timer

- Receiving LTE active time or combination of on-duration SL slots ( $t_m^{SL}$ , $t_{m+1}^{SL}, \cdots , t_{m+k}^{SL}$ ), k is the SL slot at the end of the on-duration

- Off-duration SL slot combination of the receiving UE ( $t_m^{SL}$, $t_{m+1}^{SL}, \cdots , t_{m+k}^{SL}$ )

SL communication may have a half-duplex constraint differently from the Uu link between the base station and the UE. That is, the transmitting UE may transmit SL data to the receiving UE and not receive data at the same time. The transmitting UE may monitor SCI as a receiving LTE at its on-duration or active time, and may not be able to perform SL data transmission in the corresponding interval. Accordingly, in case of selecting a time/frequency resource, the MAC layer of the UE may select a resource in consideration of at least one of the on-duration and the active time of the transmitting UE. That is, the transmitting UE may randomly select a time/frequency resource in consideration of the SL DRX configuration information of the transmitting UE. Here, the SL DRX configuration information for the transmitting UE may be set in at least one combination of the items in Table 19 below, but this is only one example and is not limited to the above-described example.

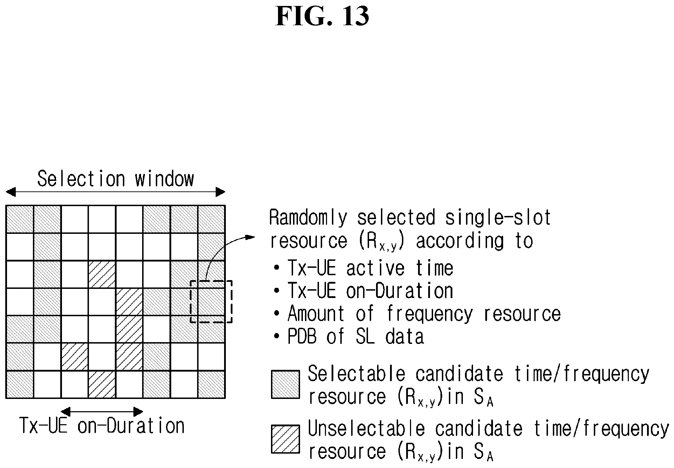

More specifically, if the transmitting UE randomly selects a time/frequency resource from a set of available resources ($S_A$) indicated by the physical layer, the transmitting LTE may consider at least one of the active time of the transmitting LTE, the on-duration of the transmitting LTE, the amount of frequency resources, the number of HARQ retransmissions (Optional), and the PDB of the SL data. As a specific example, referring to FIG. 13, the transmitting LTE excludes resources in an active state for which the transmitting UE performs SCI monitoring in the indicated set of available resources ($S_A$) and randomly selects a resource among the remaining resources. As an example, referring to Table 19 below, the on-duration interval with the active time of the transmitting LTE may be indicated by at least one combination of an on-duration period, an on-duration timer, and a slot for on-duration, and is not limited in a particular way.

That is, if the MAC layer of the transmitting LTE performs a procedure for transmitting a SL grant associated with a plurality (or single) MAC PDU transmission to the receiving LTE, the transmitting LTE may select time/frequency resource of the set of available resources ($S_A$) indicated by the physical layer in consideration of the active time and on-duration of the transmitting LTE as SL DRX configuration information of the receiving UE (or the destination UE) associated with the logical channel. That is, since the transmitting UE should perform SCI monitoring at the active time, the transmitting LTE may be able to exclude resources corresponding to the active time of the transmitting UE of the available resource set ($S_A$) indicated by the physical layer and to perform resource selection.

[Table 19]

- Transmitting UE active time or on-duration cycle + on-duration timer

- Transmitting UE active time or on-duration SL slot ( $t_m^{SL}$ ) + on-duration timer

- A combination of the transmitting LTE active time or the on-duration SL slot ( $t_m^{SL}$ , $t_{m+1}^{SL}, \cdots , t_{m+k}^{SL}$ ), k is the SL slot at the end of the on-duration

- A combination of off- duration SL slots of transmitting UE ( $t_m^{SL}$, $t_{m+1}^{SL}, \cdots , t_{m+k}^{SL}$ )

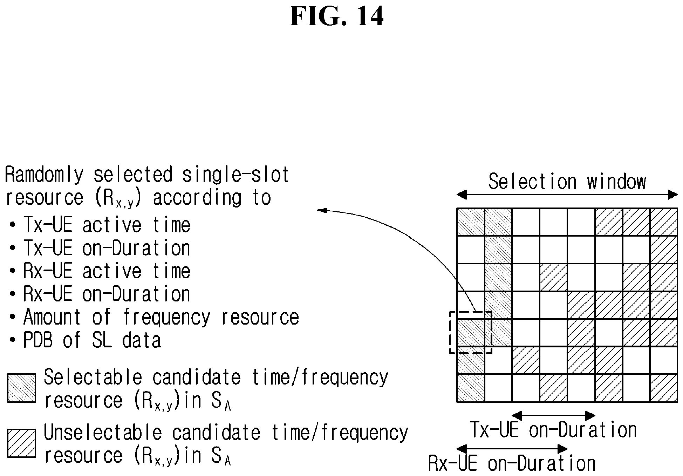

In addition, for example, a SL grant of a logical channel in which SL data is generated may be generated in consideration of the SL DRX operation of the receiving LTE (or destination UE), as described above.. Here, if the transmitting UE randomly selects a time/frequency resource from available resources indicated by the physical layer of the transmitting LTE, the transmitting LTE may consider the SL DRX configuration information of the transmitting UE and the receiving UE.. As an example, the transmitting UE may select a candidate time/frequency resource (Candidate time/frequency resource) in a resource set ($S_A$) indicated by the physical layer as described above. Here, the time/frequency resource may be $R_{x,y}$(Candidate single - slot resource), as described above. Specifically, FIG. 14 may be a method for randomly selecting a resource from candidate time/frequency resources in a resource selection window. In this case, if the MAC layer of the transmitting LTE performs a procedure for transmitting a SL grant associated with a plurality (or single) MAC PDU transmission to the receiving UE, the transmitting UE may select time/frequency resource of the set of available resources ($S_A$) indicated by the physical layer in consideration of the active time and on-duration of the transmitting UE as SL DRX configuration information of the receiving UE (or the destination UE) associated with the logical channel. Here, the SL DRX configuration information for the transmitting UE and the receiving UE may be set in at least one combination of the items in Table 20 below, but this is only one example and is not limited to the above-described example.

That is, if the transmitting UE randomly selects a time/frequency resource from a set of available resources ($S_A$) indicated by the physical layer, the transmitting UE may randomly select time/frequency resource in further consideration of at least one of the active time of the receiving LTE, the on-duration of the receiving LTE, the amount of frequency resource, the number of HARQ retransmissions (Optional), and the PDB of the SL data. In addition, the transmitting UE may randomly select the time/frequency resource by considering the active time of the transmitting UE, the on-duration of the transmitting LTE, the amount of frequency resources, the number of HARQ retransmissions (Optional), and the PDB of the SL data.

Referring to FIG. 14, the transmitting LTE may randomly select a resource only from resources in which the receiving UE is active in consideration of the on-duration of the receiving UE in the indicated set of available resources ($S_A$). In addition, even if the transmitting UE corresponds to the on-duration interval of the receiving UE in the indicated set of available resources ($S_A$), the transmitting UE may exclude resources in which the transmitting UE is active and select resources from among the remaining resources. Here, referring to Table 20, the on-duration interval with the active time of the transmitting LTE and the receiving LTE may be indicated by at least one combination of an on-duration period, an on-duration timer, and a slot for on-duration, and is not limited in a particular way.

[Table 20]

| |
|---|
| - Receiving UE active time or on-duration cycle + on-duration timer |
| - Receiving UE active time or on-duration SL slot ( $t_m^{SL}$ ) + on-duration timer |
| - Receiving LTE active time or combination of on-duration SL slots ( $t_m^{SL}$, $t_{m+1}^{SL}$, $\cdots$, $t_{m+k}^{SL}$ ), k is the SL slot at the end of the on-duration |
| - Off-duration SL slot combination of the receiving UE ( $t_m^{SL}$, $t_{m+1}^{SL}$, $\cdots$, $t_{m+k}^{SL}$ ) |
| - Transmitting UE active time or on-duration cycle + on-duration timer |
| - Transmitting UE active time or on-duration SL slot ( $t_m^{SL}$ ) + on-duration timer |
| - A combination of the transmitting LTE active time or the on-duration SL slot ( $t_m^{SL}$, $t_{m+1}^{SL}$, $\cdots$, $t_{m+k}^{SL}$ ), k is the SL slot at the end of the on-duration |
| - Off-duration SL slat combination of the transmitting UE ( $t_m^{SL}$, $t_{m+1}^{SL}$, $\cdots$, $t_{m+k}^{SL}$ ) |

Next, the physical layer of the UE may exclude the time/frequency resource in consideration of the SL DRX configuration, and report the information on the excluded resource to the higher layer. As described above, the MAC layer of the UE may select a resource from a set of available resources ($S_A$) indicated by the physical layer in consideration of the SL DRX configuration of the transmitting UE and the receiving UE.

Here, as an example, the physical layer of the UE may exclude a resource in consideration of the SL DRX configuration, and report information on the excluded resource to the higher layer. In this case, the MAC layer of the UE may randomly select a time/frequency resource from a set of resources indicated by the physical layer. That is, the physical layer of the UE may exclude a resource in consideration of the SL DRX configuration in the process of excluding the resource in FIG. 10, and the MAC layer of the UE may perform resource selection based on the information indicated by the physical layer.

For example, the higher layer of the UE in resource allocation mode 2 may request a set of available resources for PSSCH/PSCCH transmission to the physical layer of the UE. In addition, when requesting the available set as described above in slot n, parameters as shown in Table 21 below may be provided, and a availble resource set ($S_A$) may be determined based thereon.

[Table 21]

| |
|---|
| - Resource Pool |
| - L1 Priority($prio_{TX}$) |
| - Remaining packet delay budget (PDB) |
| - Number of subchannels to be used for PSCCH/PSSCH transmission ($L_{subCH}$) |

(continued)

> -Resource reservation period, $P_{rsvp\_TX}$(ms)
>
> - sl-SelectionWindowList: A list to determine $T_{2min}$ according to $prio_{TX}$
>
> - sl-ThresPSSCH-RSRP-List: A list for determining the RSRP threshold according to ($p_i$, $p_j$), wherein the value of the priority field of the received SCI format 1-A, and $p_j$ is the priority ($prio_{TX}$) selected by the transmitting LTE for transmission.
>
> - sl-ResourceReservePeriodList: Resource reserve periodcycle list
>
> - sl-SensingWindow: Upper-layer parameter to determine $T_0$
>
> - sl-TxPercentageList: List for determining X according to priority($prio_{TX}$), the proportion of total resources that can be transferred to PSSCH

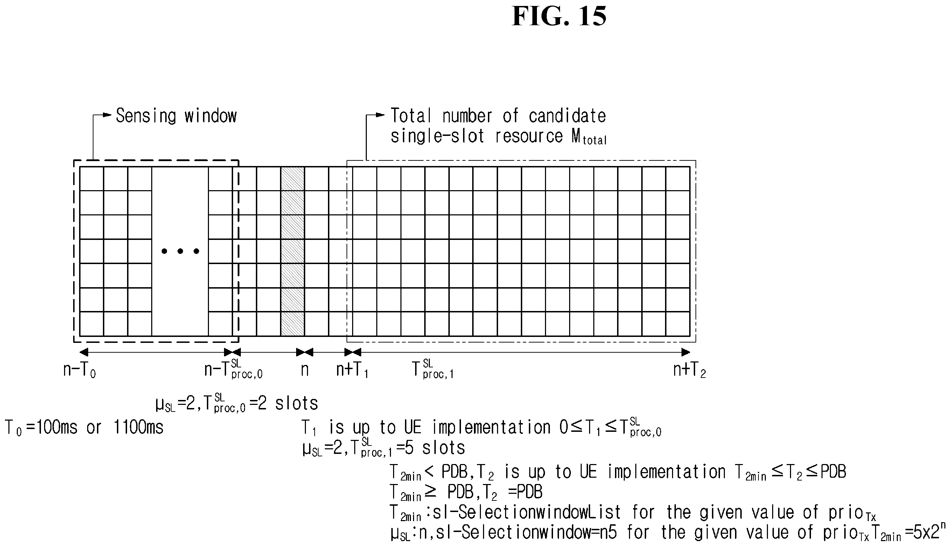

More specifically, referring to FIG. 15, the SL UE in the resource allocation mode 2 may select a resource based on sensing. For example, in FIG. 15, all slots may be SL slots, but are not limited thereto. Specifically, a resource indication request available in an n slot may occur at the LTE. At this time, the sensing window may be from n - $T_0$ to $n - T_{proc,0}^{SL} - 1$ slot. For example, if the SL bandwidth part (BWP) subcarrier spacing $\mu_{SL}$ is 2, $T_{proc,0}^{SL}$ is may be configured with two slots. In addition, to determine the location of the available resources, n + $T_1$ slot to n + $T_2$ slot may be set as a set of available resources. For example, $T_1$ may be set to 2 of the values from 0 to $T_{proc,1}^{SL}$, and $T_{proc,1}^{SL}$ may be determined by 5 slots according to $\mu_{SL}$=2. However, this is only one example and is not limited to the above-described example. In addition, for example, $T_2$ may be 16 based on the remaining PDB which is a higher-layer parameter, but this is only one example and is not limited thereto.

Here, the UE may select a resource for exclusion based on the PSCCH decoded in the sensing window and the RSRP (Received Signal Received Power) measured. Specifically, the UE may determine the $i^{th}$ of the "sl-ThresPSSCH-RSRP-List" parameter values provided through the higher layer as the RSRP threshold according to the following equation 4. Thereafter, the UE may set all $R_{x,y}$(single-slot resources) to $S_A$. The UE may exclude $R_{x,y}$ included in $S_A$ based on certain conditions. More specifically, the UE may exclude a specific unmonitored SL slot ( $t_m^{SL}$ ). Here, a specific unmonitored SL slot ( $t_m^{SL}$ ) may be a slot in which transmission of the UE is performed, and may exclude it.

In addition, if the UE receives SCI format 1-A in a specific SL slot ( $t_m^{SL}$ ) in the sensing window, the UE may determine that the SCI format is received in $t_{m+q \times P'_{rsvp\_RX}}^{SL}$ based on the resource reservation period value. In this case, the UE may exclude resource area that overlap with $R_{x,y+j \times P'_{rsvp\_TX}}$ according to frequency resource assignment and time resource assignment field value.

Here, q may be a value from 1 to $\left\lceil \frac{T_{scal}}{P_{rsvp\_RX}} \right\rceil$, and j may be a value from 0 to 10*SL_RESOURCE_RESELECT-1. "SL RESOURCE RESELECT" may be a higher-layer parameter that determines how many slots to consecutively use the time-frequency resource to be selected. In addition, $T_{scal}$ may be the $T_2$ value converted to ms.

$$[\text{Equation 4}]$$

$$i = p_i + (p_j - 1) \times 8$$

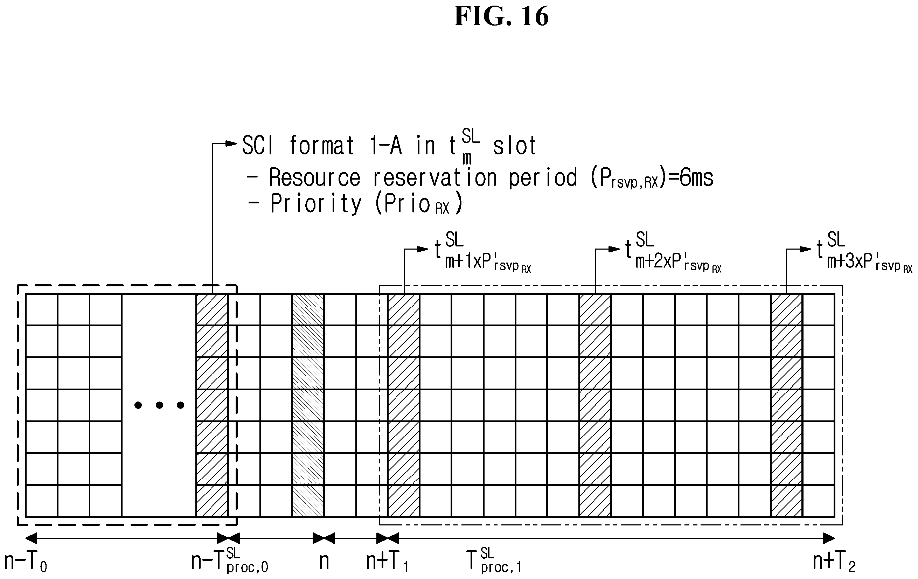

Next, the LTE, based on resource exclusion, may determine whether the total number of available resources in $S_A$ (candidate single-slot resources) is smaller than $X \cdot M_{total}$. For example, if the total number of available resources in $S_A$ (candidate single-slot resources) is less than $X \cdot M_{total}$, the UE may increase the threshold value (Th($p_i$, $p_j$)) by 3 dB and then reset $S_A$ by monitoring As a more specific example, referring to FIG. 16, the UE may exclude resources based on the specified conditions. If the UE receives SCI format 1-A in a specific SL slot $t_m^{SL}$, the LTE may compare the receive priority and transmission priority to set the RSRP threshold value.

If the RSRP of the received SCI format 1-A is higher than the threshold value, the UE may perform resource exclusion based on the corresponding SCI format 1-A. Thereafter, in that case $P_{rsvp\_RX} < T_{scal}$, n' - m ≤ $P_{rsvp\_RX}$, the UE may determine that the same SCI format is received in the $t_{m+q\times P'_{rsvpRX}}^{SL}$ SL slot at the resource reservation cycle ($P_{rsvp\_RX}$). For example, in FIG. 16, it may be $P_{rsvp\_RX}$ = 6ms, $T_{scal}$ = 16, q = 1, 2, 3, and $Q = \left\lceil \dfrac{T_{scal}}{P_{rsvp\_RX}} \right\rceil$. Accordingly, the UE may determine that the same SCI format is received in the SL slot $t_{m+1\times P'_{rsvpRX}}^{SL}$, $t_{m+2\times P'_{rsvpRX}}^{SL}$, and $t_{m+3\times P'_{rsvpRX}}^{SL}$. The UE may determine that the resource may not be used based on the time/frequency resource allocation field value indicated in the SCI format, and may exclude it. That is, the UE may determine whether $R_{x,y+j\times P'_{rsvp\_TX}}$ is an available resource in consideration of the transmission resource reservation cycle for the resource element $R_{x,y}$ of $S_A$.

Here, the UE may further perform resource exclusion in consideration of the SL DRX configuration. For example, if the available time resource indicated by the higher layer of the UE on which the SL DRX is set corresponds to the off-duration interval of the destination UE, the receiving UE may not receive the control and data signal from the SL physical channel (PSCCH/PSSCH). That is, the receiving UE in an inactive state may not be able to monitor the SCI transmitted by the transmitting UE.

In consideration of the above-described points, the UE may further perform resource exclusion in consideration of the SL DRX configuration. That is, the UE may exclude an off-duration resource of the receiving UE (destination UE) in $S_A$. Alternatively, the UE may indicate a resource available at an on-duration or active time (candidate single-slot resource) of the receiving UE (destination UE) in $S_A$. In this case, the active time may be a time based on at least one of the on-duration time, the inactivity timer, and the retransmission timer as described above. In addition, the active time may include the time when the "ra-ContentionResolutionTimer" is operated. In addition, the active time may include a time when the SR is transmitted on a Physical Uplink Control Channel (PUCCH) and is pending. In addition, the active time may include a time when the PDCCH for the new transmission indicated according to the Radio Network Temporary Identifier (C-RNTI) is not received after successful reception of the RAR for the RA preamble that is not selected by the MAC entity among the Contention Based Random Access (CBRA) preambles.

Here, in order for the UE to perform resource exclusion based on the SL DRX in $S_A$, it is necessary to obtain the SL DRX configuration information through the higher layer. For example, the SL DRX configuration information may include at least one of on-duration, off-duration, or location information of the corresponding slot of the receiving UE (destination UE), and is not limited to the above-described example.

In addition, for example, if the total number of available resources (candidate single-slot resources) of the LTE adjusts the RSRP threshold value in comparison with X · $M_{total}$, the $M_{total}$ value may be set in consideration of the on-duration of the receiving UE (destination UE). As another example, the ratio X, which is a higher-layer parameter, may be adjusted in consideration of the SL DRX configuration, or a new ratio, $X_{DRX}$, may be set in consideration of the SL DRX. That is, the total number of resources (candidate single-slot resources) available to the UE may be performed in consideration of the SL DRX configuration even when adjusting the RSRP threshold value in comparison with X · $M_{total}$.

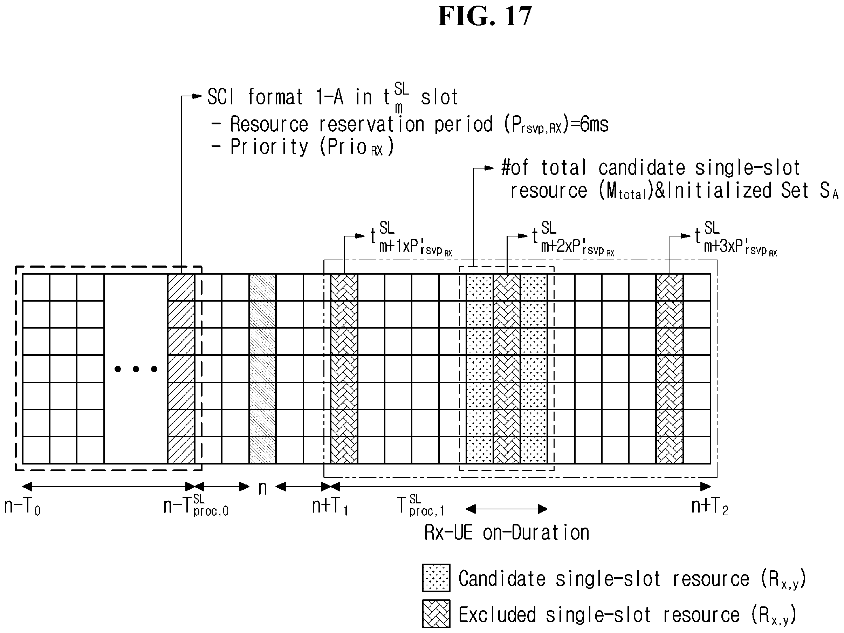

In addition, FIG. 17 may be a method indicating set $S_A$ of available resource (candidate single-slot resource) in consideration of the on-duration of the receiving UE (destination UE). More specifically, the UE may determine $R_{x,y}$(single - slot resource ) in consideration of SL DRX configuration information in the [n + $T_1$, n + $T_2$] interval. Here, x may mean the position of the starting subchannel having $L_{subCH}$, and y may mean one slot ($t_y^{SL}$) of the slots ($t_0^{SL}$, $t_1^{SL}$, $t_2^{SL}$) in the SL resource pool. In addition, $T_1$ may have a value of one of $0 \leq T_1 \leq T_{proc,1}^{SL}$, and $T_{proc,1}^{SL}$ may be the number of slots according to the subcarrier spacing ($\mu_{SL}$) of the SL BWP. In addition, $T_2$ may have a value of one of $T_{2min} \leq T_2 \leq$ remaining PDB in the cases when it is less than the remaining PDB, and in other cases it may be set to the remaining PDB, which is described above.

In this case, the SL DRX configuration information may be referred to as at least any one of a DRX cycle, an on-duration timer, an on-duration SL slot, and an on-duration SL slot set, as shown in Table 18 above. As a specific example, in FIG. 17, the UE may determine the total number of available resources (total number of candidate single-slot resources, $M_{total}$) and a set $S_A$ in consideration of the on-duration interval of the receiving UE as SL DRX configuration information. For example, the UE may determine a set $S_A$ of available resources (candidate single-slot resource, $R_{x,y}$) and a total number of available resources (total number of candidate single-slot resource, $M_{total}$) based on the on-duration interval of the receiving LTE in the selection window. Thereafter, the remaining resources after the resource exclusion process in the set $S_A$ may be reported as the MAC layer to the available resource set $S_A$ by the sensing result.

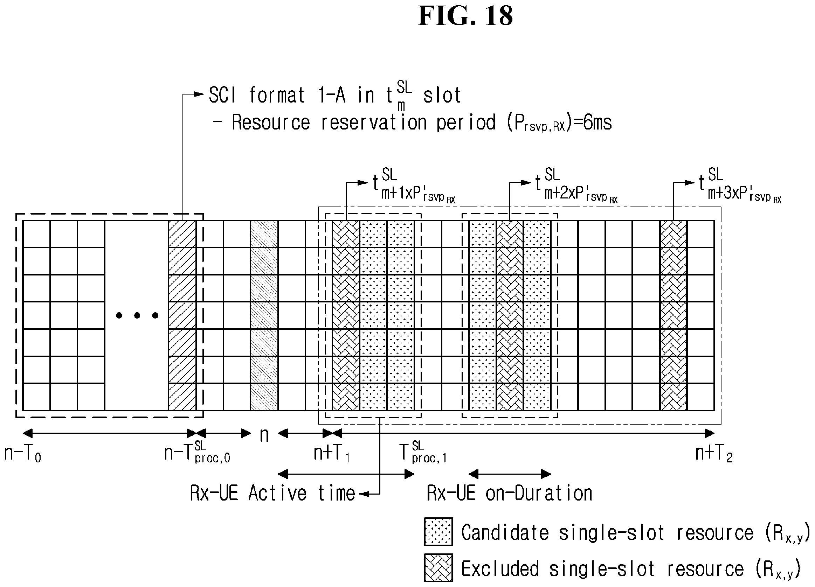

In addition, referring to FIG. 18, as an example, the total number of available resources (total number of candidate single-slot resources, $M_{total}$) and the set $S_A$ may be determined based on the active time information. For example, the active time information may include time information based on at least any one of an on-duration time, an inactivity timer, and a retransmission timer as described above. In addition, the active time information may include time information on which the "ra-ContentionResolutionTimer" is operated. In addition, the active time information may include time information in which the SR is transmitted on a Physical Uplink Control Channel (PUCCH) and is pending. In addition, the active time information may include time information that is not received after successful reception of the RA for the RA preamble for which the PDCCH for the new transmission indicated according to the C-RNTI (Radio Network Temporary Identifier) is not selected by the MAC entity among the Contention Based Random Access (CBRA) preambles.

In FIG. 18, the UE may determine the total number of available resources (total number of candidate single-slot resources, $M_{total}$) and a set $S_A$ based on the active time information. For example, the UE may determine a set $S_A$ of available resources (candidate single-slot resource, $R_{x,y}$) and a total number of resources (total number of candidate single-slot resource, $M_{total}$) based on the active time of the receiving UE. Thereafter, the sensing result may report the remaining resources to the MAC layer as a set $S_A$ of available resources after the resource exclusion process in the set to the MAC layer as a set of available resources in set $S_A$.

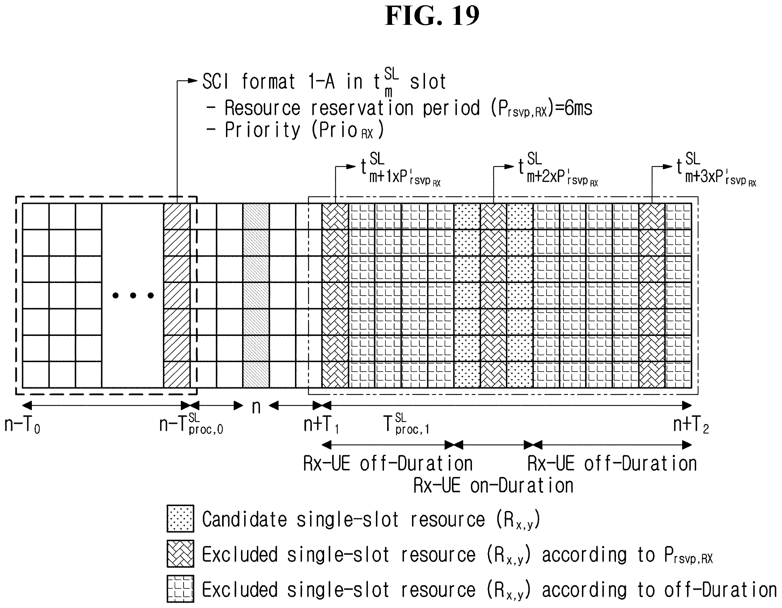

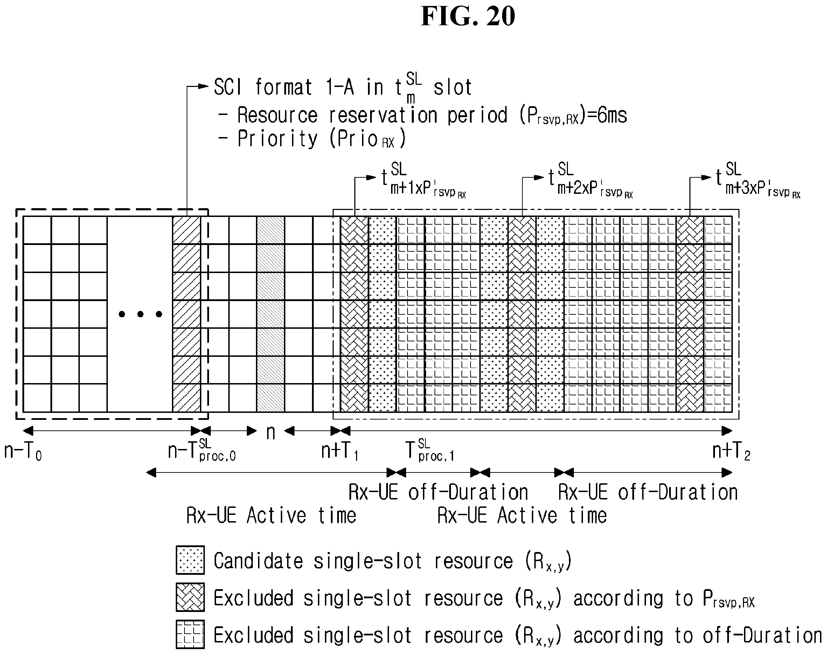

As another example, FIG. 19 and 20 may be a method for indicating, by the UE, the available resource (candidate single-slot resource, $R_{x,y}$) by excluding the off-duration of the receiving LTE (or destination LTE). Here, the LTE may select a resource for exclusion based on the decoded PSCCH and the measured RSRP in the sensing window. Specifically, the UE may determine the $i^{th}$ of the "sl-ThresPSSCH-RSRP-List" parameter value provided through the higher layer as the RSRP threshold value according to Equation 4. Thereafter, the LTE may set all $R_{x,y}$(single-slot resources) to $S_A$. The UE may exclude $R_{x,y}$ included in $S_A$ based on certain conditions. More specifically, the UE may exclude a specific unmonitored SL slot ( $t_m^{SL}$ ). Here, a specific unmonitored SL slot ( $t_m^{SL}$ ) may be a slot in which transmission of the UE is performed, and may exclude it. In addition, if the UE receives SCI format 1-A in a specific SL slot ( $t_m^{SL}$ ) in the sensing window, the UE may determine that the SCI format is received in $t_{m+q \times P'_{rsvp\_RX}}^{SL}$ based on the resource reservation period value. In this case, the UE may exclude a resource area overlapping with $R_{x,y+j \times P'_{rsvp\_TX}}$ according to the frequency and time resource assignment field values. Here, q may be a value from 1 to $\left\lceil \dfrac{T_{scal}}{P_{rsvp\_RX}} \right\rceil$ , and j may be a value from 0 to 10*SL_RESOURCE_RESELECT-1. "SL RESOURCE RESELECT" may be a higher-layer parameter that determines how many slots to consecutively use the time-frequency resource to be selected. In addition, $T_{scal}$ may be the value of $T_2$ converted to ms.

In this case, if the LTE excludes a resource (candidate single-slot resource, $R_{x,y}$) from the available resource set ($S_A$), the LTE needs to acquire SL DRX configuration information through the higher layer in order to perform resource exclusion based on the SL DRX.

In this case, the SL DRX configuration information may be referred to as at least one of a DRX cycle, an on-duration timer, an on-duration SL slot, and an on-duration SL slot set, as shown in Table 18 above. As a specific example, in FIG. 19, the UE may determine the set $S_A$ in consideration of the off-duration interval of the receiving UE as SL DRX configuration information. For example, the UE excludes resources corresponding to the off-duration interval of the receiving UE in a set $S_A$ of available resources (candidate single-slot resource, $R_{x,y}$) based on the off-duration interval of the receiving UE.

In addition, for example, the ratio X, which is a higher-layer parameter, may be adjusted in consideration of the SL DRX configuration, or a new ratio, $X_{DRX}$, considering the SL DRX may be set. That is, the UE may use SL DRX configuration information to compare the total number of candidate single-slot resources available to the UE with $X \cdot M_{total}$ to adjust the RSRP threshold value.

In addition, for example, in FIG. 20, the LTE may determine the set $S_A$ in consideration of the off-duration interval of the receiving UE and the active time of the receiving UE as SL DRX configuration information. For example, the UE excludes resources corresponding to the off-duration interval of the receiving UE in the set of available resources (candidate single-slot resource, $R_{x,y}$) based on the off-duration interval and active time of the receiving UE, and based on the resources corresponding to the active time, the set $S_A$ may be reported to MAC layer.

In addition, for example, FIGS. 17 to 19 describe a method of excluding resources in consideration of SL DRX configuration information of the receiving LTE, but is not limited thereto. For example, when a resource is excluded in consideration of SL DRX configuration information in FIGS. 17 to 19, the resource may be excluded in consideration of SL DRX configuration information of the transmitting LTE. For example, the SL DRX configuration information of the transmitting UE may be SL DRX configuration information set based on Table 19. That is, the SL DRX configuration information may be referred to as at least any one of a DRX cycle, an on-duration timer, an on-duration SL slot, and an on-duration SL slot set, as shown in Table 19 above. For example, the transmitting UE performs SCI monitoring for receiving data from another UE in an interval corresponding to the active time based on the SL DRX configuration of the transmitting UE, so that the corresponding resource may be excluded and is not limited to the above-described example.

In addition, as an example, if a resource is excluded in consideration of SL DRX configuration information in FIGS. 17 to 19, the resource may be excluded in consideration of SL DRX configuration information of the transmitting and receiving UE. For example, the SL DRX configuration information of the transmitting UE may be SL DRX configuration information set based on Table 20. That is, the SL DRX configuration information may be referred to as at least one of a DRX cycle, an on-duration timer, an on-duration SL slot, and an on-duration SL slot set, as shown in Table 20 above. For example, the transmitting UE performs SCI monitoring in a interval corresponding to the active time based on the SL DRX configuration of the transmitting UE, so that the corresponding resource may be excluded. In addition, the receiving UE may not perform SCI monitoring in the interval corresponding to the active time, and the corresponding resource may be excluded, and is not limited to the above-described example. FIGS. 17 to 19 above are described based on the SL DRX configuration of the receiving UE for convenience of description, but the same can be applied to the SL DRX configuration of the transmitting UE and the SL DRX configuration of the transmitting-receiving UE, and is not limited to the above-described example.

In addition, as an example, a common DRX cycle (hereinafter referred to as COD) may be set to enable minimal data transmission and reception between SL UEs in a resource pool in which the NR SL DRX configuration is set by default. For example, the COD setting is set to per UE (e.g., per UE, per direction (link)-specific or per peer UEs unicast/groupcast), per resource pool, per QoS (Quality of Service) class (PC5 QoS Identifier, PQI), per service type (e.g. PSID / ITS-AID) or per LCH (Logical Channel) may be configured independently. In addition, an independent NR SL DRX configuration may be additionally set to the COD available to be shared by all UEs. Here, the additional NR SL DRX configuration may be configured independently per some LTEs (e.g. per UE, per direction (link)-specific or per peer LTEs), per resource pool, per QoS class (PQI), per service type (e.g. PSID / ITS-AID) or per LCH.

Here, the transmitting LTE may reserve periodic resources for SL communication or receive resources from the base station. For example, SL periodic resources may be 1 ~ 99 ms, 100 ms, 200 ms, 300 ms, ..., 1000 ms. Specifically, a UE in a resource allocation mode 1 set to receive a resource from the base station may be set to 0, 100, 200, 300, ..., 1000ms (periodCG1) or 1 ~ 99ms (periodCG2) based on Table 22 below. In addition, for example, a UE in a resource allocation mode 2 in which the UE determines a resource may set 0, 100, 200, 300, ..., 1000ms (ResourceReservationPeriod1) or 1 ~ 99ms (ResourceReservationPeriod1) as a period based on Table 22 below.

More specifically, the resource allocation mode 1 needs to determine a SL slot monitored by the receiving UE according to a configuration grant (CG) cycle. In addition, in resource allocation mode 2, there is a need to determine a SL slot monitored by the receiving LTE according to the resource reservation period.

In this case, for example, the transmitting UE may needs to set SL DRX cycle of the receiving LTE in which the unicast connection is performed in consideration of SL periodic resource. More specifically, in case of setting the SL DRX cycle related to the active time of the UE, the UE may allocate resources more efficiently by setting the SL DRX cycle in consideration of the SL cycle resource. In the following, based on the above, a method of instructing the active/deactive of the SL DRX configuration through the SL DRX MAC CE and a method of changing the SL DRX cycle are described.

[Table 22]

| |
|---|
| -Resource allocation model: periodCG1: 0, 100, 200, 300, ..., 1000ms, periodCG2: 1~99ms<br>- Resource allocation mode 2: ResourceReservationPeriod1: 0, 100, 200, 300, ..., 1000ms, ResourceReservationPeriod2: 1~99ms |

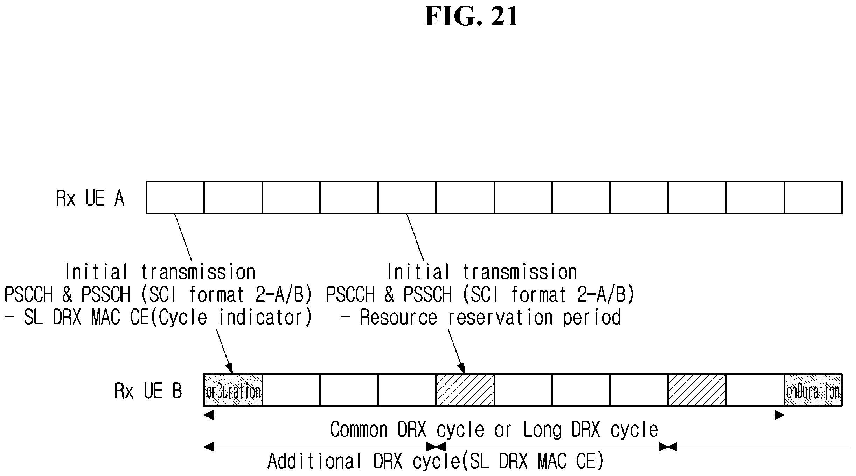

As an example, referring to FIG. 21, the transmitting UE may transmit the SL DRX MAC CE to the receiving UE to change the SL DRX period. The transmitting UE may indicate whether to activate additional SL DRX operation of the receiving LTE through the MAC CE. That is, the transmitting UE may indicate enable/disable of additional SL DRX operation of the receiving UE through the MAC CE. In addition, the transmitting UE may indicate modification of the SL DRX period of the receiving UE through the MAC CE. In this case, for example, the transmitting UE may indicate to change a specific DRX cycle according to a specific DRX configuration set specifically through the MAC CE. As another example, the transmitting UE may indicate to change the common DRX cycle according to the common SL DRX configuration of the receiving UE through the MAC CE, and is not limited to the above-described example.

More specifically, the transmitting LTE may perform resource (re)selection for a plurality of MAC PDUs. The UE may configure the resource reservation cycle and transmit the 1st SCI. Here, if the transmitting UE additionally set up PSCCH monitoring of the receiving UE, the transmitting UE may transmit the SL DRX MAC CE to the receiving UE. The receiving UE receiving the SL DRX MAC CE sets a specific additional SL DRX period indicated by the SL DRX MAC CE, and monitors the PSCCH / PSSCH in a SL slot corresponding to the SL DRX cycle.

For example, in a Uu between a base station and a UE, an interruption of the active time may be indicated through a DRX MAC CE or a long DRX MAC CE. Here, a method of instructing DRX cycle active/deactive may be required in SL communication. For example, the SL DRX MAC CE may indicate a specific SL DRX cycle value. As another example, the SL DRX MAC CE may indicate a specific SL DRX configuration cycle change or a period value to be changed, and is not limited to the above-described embodiments.

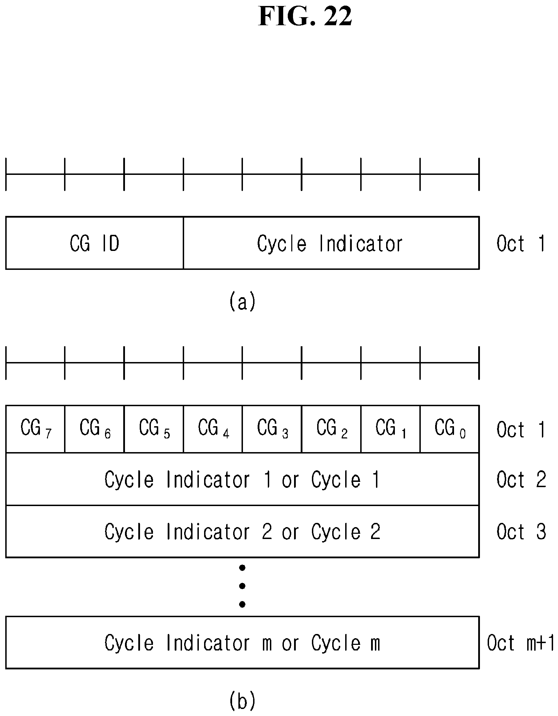

Referring to FIG. 22(a), the SL DRX MAC CE may be composed of a CG ID and a cycle indicator as an identifier configured in the higher layer. For example, the CG ID value may be one value that identifies a plurality of configured grants. As another example, in resource allocation mode 2, the SL DRX MAC CE may have a CG ID value based on paired UEs. Here, the CG ID may be a value based on a source/destination pair may be a value for identifying a unicast connection of LTEs. In addition, the CG ID value may use other identifiers and is not limited to the above-described example. For example, the period indicator may be a value associated with a value of one of the periods (1 ~ 99 ms, 100 ms, 200 ms, ..., 1000 ms) based on Table 22. However, the form and format of SL DRX MAC CE are not limited to FIG. 22(a), and the format may be different depending on the method of directly directing or mapping the period.

In addition, for example, referring to FIG. 22 (b), it may be an SL DRX MAC CE used in SL resource allocation mode 1. Here, the transmitting UE may indicate a change in the SL DRX period of the receiving UE through the SL DRX MAC CE. For example, the CG ID value may be one value that identifies a plurality of configured grants. As another example, in resource allocation mode 2, the SL DRX MAC CE may have a CG ID value based on paired UEs. Here, a value based on a source/destination pair may be a value for identifying a unicast connection of UEs. In addition, the CG ID value may use other identifiers and is not limited to the above-described example. In addition, the cycle indicator may be a value associated with a value of one of the periods (1 ~ 99 ms, 100 ms, 200 ms, ..., 1000 ms) based on Table 22. Alternatively, the cycle indicator may directly indicate a value of one of the periods (1 ~ 99 ms, 100 ms, 200 ms, ..., 1000 ms) based on Table 22, and is not limited to the above-described example.

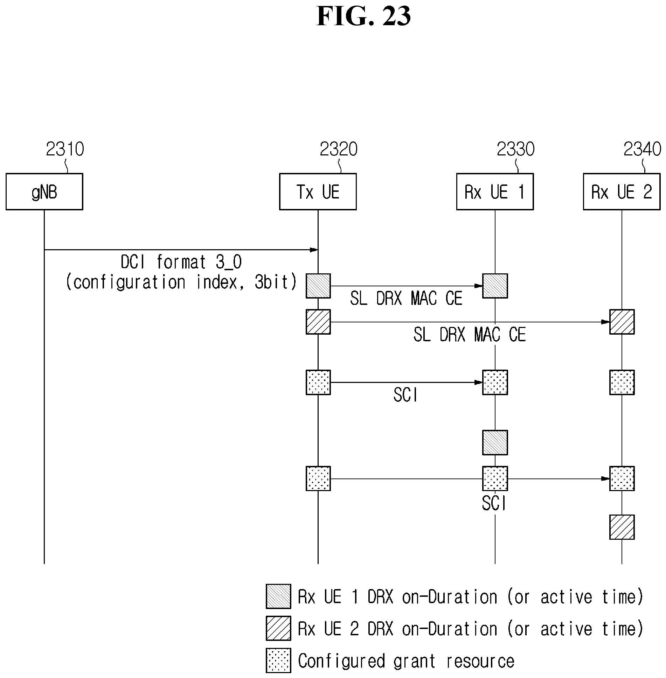

In connection with the above procedure, referring to FIG. 23, the base station 2310 may transmit DCI format 3_0 to the transmitting LTE 2320. Here, DCI format 3_0 may indicate a configuration index. For example, a field indicating a configuration index may be 3 bits. For example, the base station may instruct the transmitting LTE 2320 to activate the configured grant type 2 based on the configuration index value. In this case, the transmitting UE 2320 may transmit data to the receiving UEs 2330 and 2340 through a time/frequency resource indicated by the SL grant (SL grant) based on the activated configured grant type 2. As another example, the transmitting UE 2320 may be indicated to activate the configured grant type 1 through an RRC message. In this case, the transmitting UE 2320 may transmit data to the receiving UEs 2330 and 2340 through a time/frequency resource indicated by the SL grant (SL grant) based on the activated configured grant type 1.

Here, for example, the receiving LTE 1 2330 and the receiving LTE 2 2340 may perform a unicast session connection with the transmitting UE 2320, respectively. The receiving UE 1 2330 and the receiving LTE 2 2340 may perform active time synchronization by performing PC5-RRC connection and by setting at least one of common DRX configuration and specific DRX configuration, respectively with transmitting UE 2320. Thereafter, the transmitting UE 2320 may perform a transmission to each receiving UE 2330 and 2340 when SL data occurs through the set grant resource. Here, if each of the receiving LTEs 2330 and 2340 is not monitoring the PSCCH at the corresponding time/frequency resource, each of the receiving UEs 2330 and 2340 may not receive SL data (control/data signal) transmitted from the transmitting UE 2320. Therefore, there is a need to change the existing common DRX configuration or a specific DRX configuration (period, etc) or to add a new specific DRX configuration.

For example, the transmitting UE 2320 may transmit an SL DRX MAC CE to the target receiving LTE to indicate a change to at least one of the common DRX configuration and a specific DRX configuration. As another example, the transmitting UE 2320 may transmit an SL DRX MAC CE to the target receiving LTE to indicate the release of at least one of the common DRX configuration and a specific DRX configuration. As another example, the transmitting UE 2320 may transmit an SL DRX MAC CE to the target receiving UE to add a configuration for at least one of the specific DRX configurations. For example, in FIG. 23, the transmitting UE 2320 transmits SL DRX MAC CE to each of the receiving LTEs 2330 and 2340, but it may also be possible to send an SL DRX MAC CE to some receiving UEs. In addition, for example, the transmitting LTE 2320 may indicate at least one of changing, releasing, and adding to the DRX configuration (common DRX configuration, specific DRX configuration) to the receiving UE where data is not buffered in the logical channel. Through this, the power consumption of the UE performing SL communication may be reduced. In particular, in SL communication performed based on various forms, it may be possible to adjust the DRX configuration in consideration of each communication type, and thereby to reduce the power consumption of the UE.

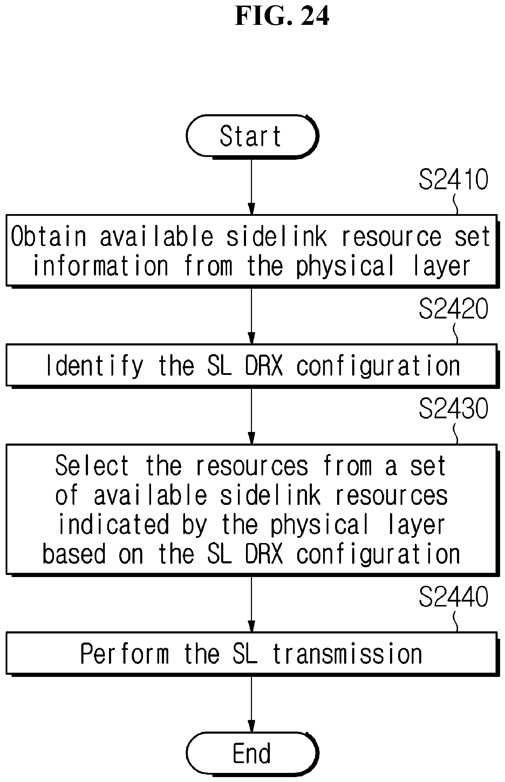

FIG. 24 is a flowchart illustrating a method of selecting a SL resource by a LTE to which the present disclosure may apply. For example, the MAC layer of the LTE may obtain available SL resource set information from the physical layer.(S2410) Specifically, the physical layer of the UE may identify a set $S_A$ of a single slot resource candidate. Here, the $S_A$ may be a set of all candidate single-slot resource candidates. For example, a candidate single-subframe resource may be represented by $R_{x,y}$, y is a slot y, and x may correspond to a frequency axis resource in slot y. The physical layer of the UE may exclude a resource based on the certain condition in a set of all candidate single-slot resource candidates, and transmit information about the selected resource to the MAC layer of the UE.

In this case, the MAC layer of the UE identifies the SL DRX configuration set in the UE (S2420) and selects a resource from a set of available SL resources indicated by the physical layer based on the set SL DRX configuration.(S2430) In this case, as an example, the SL DRX configuration information may include at least one of the on-duration information of the receiving UE and the on-duration information of the transmitting UE, and may be shown in Tables 18 to 20 above. In this case, for example, the MAC layer of the UE may randomly select a resource from among resources corresponding to the on-duration interval of the receiving UE among the set of available SL resources indicated by the physical layer. Another example, the MAC layer of the LTE may randomly select a resource by excluding resources corresponding to the on-duration interval of the transmitting UE among the set of available SL resources indicated from the physical layer.

Another example, the MAC layer of the LTE may perform the SL transmission based on the resources which corresponds to the on-duration interval of the receiving UE and which is not corresponds to the on-duration interval of the transmitting UE among the set of available SL resources indicated by the physical layer. (S2440)

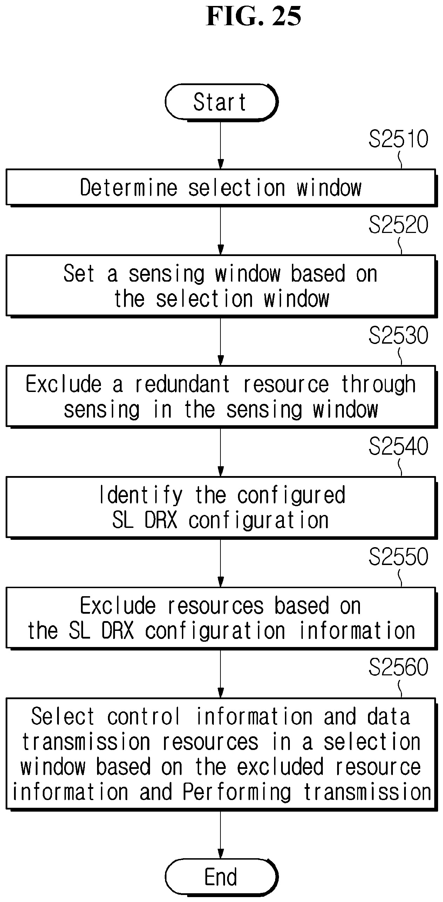

FIG. 25 is a flowchart illustrating a method of selecting a SL resource by a LTE to which the present disclosure may apply. For example, the LTE may determine a selection window for selecting a SL transmission resource.(S2510) Next, the UE may set a sensing window based on the selection window.(S2520) For example, the sensing window may be configured based on at least any one of the entire sensing method and the partial sensing method, as described above. Next, the UE may exclude redundant resources through sensing in the sensing window.(S2530) In this case, the UE may identify the configured SL DRX configuration (S2540) and further exclude resources based on the SL DRX configuration information.(S2550) For example, the SL DRX configuration information may include at least one of the on-duration information of the receiving UE and the on-duration information of the transmitting UE, and may be shown in Tables 18 to 20 above. In this case, for example, if the $S_A$ excludes a resource based on the specified conditions, the UE may exclude the resource using the SL DRX configuration information. For example, the LTE may exclude resources that are not resources corresponding to the on-duration interval of the receiving UE. As another example, the LTE may exclude resources corresponding to the on-duration interval of the transmitting UE, and is not limited to the above-described example. Next, the UE may select resources for control information and data transmission in a selection window based on the excluded resource information and perform transmission.(S2560) That is, the physical layer of the UE may perform resource exclusion based on the SL DRX configuration information, and transmit the information thereto to the MAC layer of the UE. The MAC layer of the UE may randomly select a resource based on the resource set information indicated by the physical layer and perform SL data transmission.

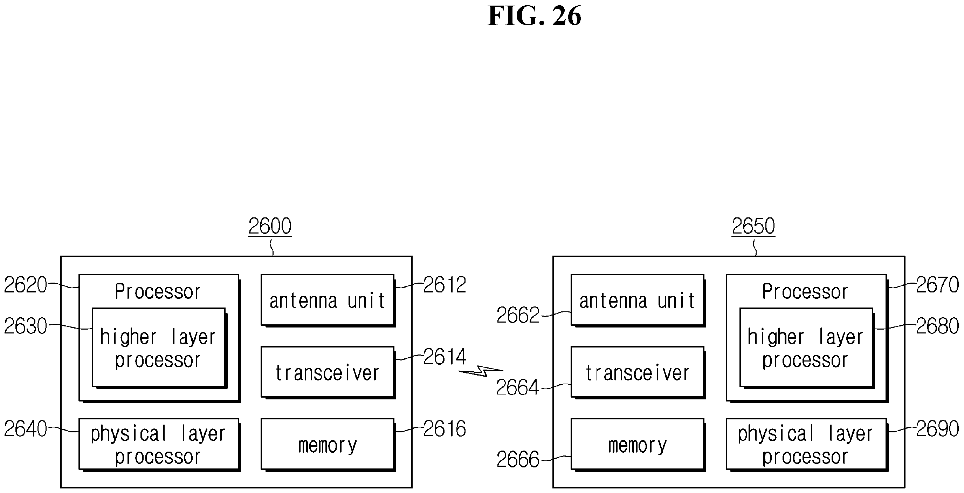

FIG. 26 illustrates a base station device and a UE device to which the present disclosure may apply.

The base station device 2600 may include a processor 2620, an antenna unit 2612, a transceiver 2614, and a memory 2616.

The processor 2620 performs baseband-related signal processing and may include a higher-layer processor 2630 and a physical layer processor 2640. The higher layer processor 2630 may process the operation of a medium access control (MAC) layer, a radio resource control (RRC) layer, or a higher layer. The physical layer processor 2640 may process operations of the physical (PHY) layer (eg, uplink receive signal processing, downlink transmission signal processing). In addition to performing baseband-related signal processing, the processor 2620 may also control the operation of the base station device 2600 as a whole.

The antenna unit 2612 may include one or more physical antennas, and may support multiple input multiple output (MIMO) transmission and reception when including a plurality of antennas. In addition, beamforming can be supported.

The memory 2616 may store computationally processed information of the processor 2620, software, operating systems, applications, and the like related to the operation of the base station device 2600, and may include components such as buffers.

The processor 2620 of the base station 2600 may be configured to implement the operation of the base station in the embodiments described herein.

The UE device 2650 may include a processor 2670, an antenna unit 2662, a transceiver 2664, and a memory 2666. For example, in the present invention, the UE device 2650 may perform communication with the base station device 2600. As another example, in the present invention, the LTE device 2650 may perform SL communication with another LTE device. That is, the LTE device 2650 of the present invention refers to a device capable of communicating with at least one of the base station device 2600 and other UE devices, and is not limited to communication with a specific device.

The processor 2670 performs baseband-related signal processing and may include a higher-layer processor 2680 and a physical layer processor 2690. The higher layer processor 2680 may process the operation of the MAC layer, the RRC layer, or the higher layer. The physical layer processor 2690 may process the operation of the PHY layer (eg, downlink receive signal processing, uplink transmission signal processing). In addition to performing baseband-related signal processing, the processor 2670 may also control the operation of the UE device 2650 as a whole.

The antenna unit 2662 may include one or more physical antennas, and may support MIMO transmission and reception when including a plurality of antennas. In addition, beamforming can be supported.

The memory 2666 may store computationally processed information of the processor 2670, software, operating systems, applications, and the like related to the operation of the UE device 2650, and may include components such as buffers.

Here, the processor 2670 of the LTE device 2650 may set the SL DRX configuration through the higher layer. In this case, the processor 2670 of the UE device 2650 may select a resource from among the available resource set indicated from the physical layer based on the SL DRX configuration.

In addition, the processor 2670 of the LTE device 2650 may perform resource exclusion in consideration of SL DRX configuration information in the process of selecting and excluding resources in the physical layer. In addition, the processor 2070 of the UE device 2050 may perform at least one of changing, adding, and releasing the SL DRX configuration, and is not limited to the above-described practical examples.

The UE device 2650 according to an example of the present invention may be associated with a vehicle. For example, the UE device 2650 may be integrated into the vehicle, located in the vehicle, or located on the vehicle. In addition, the UE device 2650 according to the present invention may be a vehicle itself. In addition, the UE device 2650 according to the present invention may be at least one of a wearable terminal, an AV / VR, an IoT terminal, a robot terminal, and a public safety terminal. The LTE device 2650 to which the present invention is applicable may include various types of communication devices in which interactive services using SLs are supported for services such as Internet access, service performance, navigation, real-time information, autonomous driving, safety, and risk diagnosis. In addition, any type of communication device capable of SL operation may be included in AR / VR apparatus or sensor, performing a relay operation.

Here, the vehicles to which the present invention applies may include autonomous vehicles, semi-autonomous vehicles, non-autonomous vehicles, and the like. On the other hand, the LTE device 2650 according to an example of the present invention is described as being associated with a vehicle, but one or more of the UEs may not be associated with a vehicle. This is an example, and should not be construed so that the application of the present invention is limited according to the examples described.

In addition, the LTE device 2650 according to an example of the present invention may include various types of communication devices that can perform cooperation supporting interactive services using SLs. That is, the LTE device 2650 may be used not only to support an interactive service using a direct SL but also as a cooperative device to support an interactive service using a SL.

Also, various examples of the present disclosure may be implemented by hardware, firmware, software, or combination thereof. In the case of implementation by hardware, the examples may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that operations of the method of the various examples may be executed on an apparatus or a computer, and a non-transitory computer-readable medium storing such software or instructions to be executable on an apparatus or a computer.

Various examples of the present disclosure are to explain representative aspects of the present disclosure rather than listing all the possible combinations and matters described in the various examples may be applied alone or in combination of at least two of the examples.

**INDUSTRIAL APPLICABILITY**

The above may be applied to various systems.

**Claims**

1. A method for supporting, by a LTE, SL communication in a wireless communication system, the method comprising:

   acquiring available SL resource set information from the physical layer of the UE;
   identifying SL DRX configuration information set in the UE;
   selecting a resource from a set of available SL resources indicated from the physical layer based on the SL DRX configuration information set in the UE; and
   performing SL transmission.

2. A method supporting, by a UE, SL communication in a wireless communication system, the method comprising:

   determining the selection window by the UE;
   determining a sensing window based on the determined selection window;
   excluding redundant resources through sensing in the determined sensing window;
   identifying SL DRX configuration information set in the UE;
   excluding resources based on the SL DRX configuration information set in the UE; and
   selecting control information and data transmission resources in a selection window based on the excluded resource information, and performing SL transmission.

**FIG. 1**

| Downlink frame $i$ |
|---|

| Uplink frame $i$ |
|---|

$N_{TA} \, T_s$

# FIG. 2

One sub frame

$N^{\text{symbols}\mu}_{\text{sub frame}}$ OFDM symbols

$k = N^{\mu}_{RB}\, N^{RB}_{sc}$ -1

Resource block

Resource element
$-(k,\bar{l})$ in resource grid
$-(k,l)$ in resource block

$N^{\mu}_{RB}\, N^{RB}_{sc}$ subcarriers

$N^{RB}_{sc}$ subcarriers

$k = 0$

$l = 0$

$\bar{l} = 14 \cdot 2^{\mu}$ -1

# FIG. 3

One SL slot

One subchannel

One subchannel

AGC

DMRS

DMRS

DMRS

DMRS

Tx-Rx switching

DMRS

2nd stage

AGC

PSCCH

DMRS

2nd stage

DMRS

DMRS

Tx-Rx switching

# FIG. 4

EP 4 280 733 A1

# FIG. 5

Total number of configured subchannel

Number of subchannels used for Tx of UE

Number of subchannels granted to UE

n-a          n-1 n          n+b

# FIG. 6

EP 4 280 733 A1

# FIG. 7

EP 4 280 733 A1

# FIG. 8

# FIG. 9

EP 4 280 733 A1

## FIG. 10

TTI m-a

TTI m-b

TTI m

TTI m+c

TTI m+e

TTI m+c'

TTI m+e'

Sensing Window

Selection/Reselection

PSSCH(TB#1)

PSCCH(SA#1)

PSSCH(TB#2)

PSCCH(SA#2)

# FIG. 11

base station    1st UE    2nd UE

PDCCH (DCI) →

PSCCH (SCI) →

PSSCH →

(a)

1st UE    2nd UE

PSCCH (SCI) →

PSSCH →

(b)

## FIG. 12

Selection window

Ramdomly selected single-slot resource ($R_{x,y}$) according to
- Rx-UE active time
- Rx-UE on-Duration
- Amount of frequency resource
- PDB of SL data

▨ Candidate time/frequency resource ($R_{x,y}$) in $S_A$

Rx-UE on-Duration

# FIG. 13

Selection window

Ramdomly selected single-slot
resource ($R_{x,y}$) according to
• Tx-UE active time
• Tx-UE on-Duration
• Amount of frequency resource
• PDB of SL data

Tx-UE on-Duration

☐ Selectable candidate time/frequency
resource ($R_{x,y}$) in $S_A$

▨ Unselectable candidate time/frequency
resource ($R_{x,y}$) in $S_A$

# FIG. 14

Ramdomly selected single-slot resource ($R_{x,y}$) according to
- Tx-UE active time
- Tx-UE on-Duration
- Rx-UE active time
- Rx-UE on-Duration
- Amount of frequency resource
- PDB of SL data

▨ Selectable candidate time/frequency resource ($R_{x,y}$) in $S_A$

▨ Unselectable candidate time/frequency resource ($R_{x,y}$) in $S_A$

Selection window

Tx-UE on-Duration

Rx-UE on-Duration

# FIG. 15

Sensing window

Total number of candidate single-slot resource $M_{total}$

$n-T_0$  $n-T_{proc,0}^{SL}$  $n$  $n+T_1$  $T_{proc,1}^{SL}$  $n+T_2$

$\mu_{SL}=2, T_{proc,0}^{SL}=2$ slots

$T_0=100ms$ or $1100ms$

$T_1$ is up to UE implementation $0 \leq T_1 \leq T_{proc,0}^{SL}$

$\mu_{SL}=2, T_{proc,1}^{SL}=5$ slots

$T_{2min} < PDB, T_2$ is up to UE implementation $T_{2min} \leq T_2 \leq PDB$

$T_{2min} \geq PDB, T_2 = PDB$

$T_{2min}$ : sl-SelectionwindowList for the given value of $prio_{Tx}$

$\mu_{SL}$ : n, sl-Selectionwindow=n5 for the given value of $prio_{Tx} T_{2min}=5 \times 2^n$

# FIG. 16

SCI format 1-A in $t^{SL}_m$ slot
- Resource reservation period $(P_{rsvp,RX})$=6ms
- Priority $(Prio_{RX})$

$t^{SL}_{m+1 \times P'_{rsvp RX}}$ $\qquad$ $t^{SL}_{m+2 \times P'_{rsvp RX}}$ $\qquad$ $t^{SL}_{m+3 \times P'_{rsvp RX}}$

$n-T_0$ $\qquad$ $n-T^{SL}_{proc,0}$ $\qquad$ $n$ $\quad$ $n+T_1$ $\qquad$ $T^{SL}_{proc,1}$ $\qquad$ $n+T_2$

EP 4 280 733 A1

# FIG. 17

SCI format 1-A in $t_m^{SL}$ slot
- Resource reservation period $(P_{rsvp,RX})$=6ms
- Priority $(Prio_{RX})$

#of total candidate single-slot resource $(M_{total})$&Initialized Set $S_A$

$t_{m+1xP'rsvp_{RX}}^{SL}$  $t_{m+2xP'rsvp_{RX}}^{SL}$  $t_{m+3xP'rsvp_{RX}}^{SL}$

$n-T_0$  $n-T_{proc,0}^{SL}$  n  $n+T_1$  $T_{proc,1}^{SL}$  $n+T_2$

Rx-UE on-Duration

Candidate single-slot resource $(R_{x,y})$

Excluded single-slot resource $(R_{x,y})$

EP 4 280 733 A1

# FIG. 18

SCI format 1-A in $t_m^{SL}$ slot
- Resource reservation period $(P_{rsvp,RX})$=6ms

$t_{m+1 \times P'_{rsvp\,RX}}^{SL}$  $t_{m+2 \times P'_{rsvp\,RX}}^{SL}$  $t_{m+3 \times P'_{rsvp\,RX}}^{SL}$

$n-T_0$    $n-T_{proc,0}^{SL}$    n    $n+T_1$    $T_{proc,1}^{SL}$    $n+T_2$

Rx-UE Active time    Rx-UE on-Duration

▦ Candidate single-slot resource $(R_{x,y})$

▨ Excluded single-slot resource $(R_{x,y})$

EP 4 280 733 A1

# FIG. 19

SCI format 1-A in $t_m^{SL}$ slot
- Resource reservation period $(P_{rsvp,RX})$=6ms
- Priority $(Prio_{RX})$

$t_{m+1\times P'_{rsvp_{RX}}}^{SL}$  $t_{m+2\times P'_{rsvp_{RX}}}^{SL}$  $t_{m+3\times P'_{rsvp_{RX}}}^{SL}$

$n-T_0$    $n-T_{proc,0}^{SL}$    n    $n+T_1$    $T_{proc,1}^{SL}$    $n+T_2$

Rx-UE off-Duration          Rx-UE off-Duration
Rx-UE on-Duration

▦ Candidate single-slot resource $(R_{x,y})$

▧ Excluded single-slot resource $(R_{x,y})$ according to $P_{rsvp,RX}$

▥ Excluded single-slot resource $(R_{x,y})$ according to off-Duration

EP 4 280 733 A1

**FIG. 20**

SCI format 1-A in $t_m^{SL}$ slot
- Resource reservation period $(P_{rsvp,RX})$=6ms
- Priority $(Prio_{RX})$

$t_{m+1 \times P'_{rsvp_{RX}}}^{SL}$   $t_{m+2 \times P'_{rsvp_{RX}}}^{SL}$   $t_{m+3 \times P'_{rsvp_{RX}}}^{SL}$

$n-T_0$   $n-T_{proc,0}^{SL}$   $n$   $n+T_1$   $T_{proc,1}^{SL}$   $n+T_2$

Rx-UE off-Duration   Rx-UE off-Duration

Rx-UE Active time   Rx-UE Active time

▦ Candidate single-slot resource $(R_{x,y})$

▨ Excluded single-slot resource $(R_{x,y})$ according to $P_{rsvp,RX}$

▦ Excluded single-slot resource $(R_{x,y})$ according to off-Duration

EP 4 280 733 A1

# FIG. 21

Rx UE A

Initial transmission
PSCCH & PSSCH (SCI format 2-A/B)
- SL DRX MAC CE(Cycle indicator)

Initial transmission
PSCCH & PSSCH (SCI format 2-A/B)
- Resource reservation period

Rx UE B | onDuration | ... | onDuration |

Common DRX cycle or Long DRX cycle

Additional DRX cycle(SL DRX MAC CE)

EP 4 280 733 A1

# FIG. 22

| CG ID | Cycle Indicator | Oct 1 |
|---|---|---|

(a)

| CG$_7$ | CG$_6$ | CG$_5$ | CG$_4$ | CG$_3$ | CG$_2$ | CG$_1$ | CG$_0$ | Oct 1 |
|---|---|---|---|---|---|---|---|---|

| Cycle Indicator 1 or Cycle 1 | Oct 2 |
|---|---|
| Cycle Indicator 2 or Cycle 2 | Oct 3 |

$\vdots$

| Cycle Indicator m or Cycle m | Oct m+1 |
|---|---|

(b)

# FIG. 23

Rx UE 1 DRX on-Duration (or active time)
Rx UE 2 DRX on-Duration (or active time)
Configured grant resource

# FIG. 24

```
        ┌─────────────┐
        │    Start    │
        └──────┬──────┘
               │                          S2410
        ┌──────▼─────────────────────────────┐
        │ Obtain available sidelink resource  │
        │  set information from the physical  │
        │              layer                  │
        └──────┬─────────────────────────────┘
               │                          S2420
        ┌──────▼─────────────────────────────┐
        │   Identify the SL DRX configuration │
        └──────┬─────────────────────────────┘
               │                          S2430
        ┌──────▼─────────────────────────────┐
        │   Select the resources from a set   │
        │   of available sidelink resources   │
        │   indicated by the physical layer   │
        │   based on the SL DRX configuration │
        └──────┬─────────────────────────────┘
               │                          S2440
        ┌──────▼─────────────────────────────┐
        │      Perform the SL transmission    │
        └──────┬─────────────────────────────┘
               │
        ┌──────▼──────┐
        │     End     │
        └─────────────┘
```

# FIG. 25

```
                    ┌──────────┐
                    │  Start   │
                    └────┬─────┘
                         │              S2510
                         ▼
        ┌────────────────────────────────────┐
        │      Determine selection window     │
        └────────────────┬───────────────────┘
                         │              S2520
                         ▼
        ┌────────────────────────────────────┐
        │       Set a sensing window based on │
        │         the selection window        │
        └────────────────┬───────────────────┘
                         │              S2530
                         ▼
        ┌────────────────────────────────────┐
        │  Exclude a redundant resource through│
        │      sensing in the sensing window  │
        └────────────────┬───────────────────┘
                         │              S2540
                         ▼
        ┌────────────────────────────────────┐
        │         Identify the configured     │
        │          SL DRX configuration       │
        └────────────────┬───────────────────┘
                         │              S2550
                         ▼
        ┌────────────────────────────────────┐
        │        Exclude resources based on   │
        │   the SL DRX configuration information│
        └────────────────┬───────────────────┘
                         │              S2560
                         ▼
        ┌────────────────────────────────────┐
        │  Select control information and data│
        │  transmission resources in a selection│
        │   window based on the excluded resource│
        │  information and Performing transmission│
        └────────────────┬───────────────────┘
                         │
                         ▼
                    ┌──────────┐
                    │   End    │
                    └──────────┘
```

**FIG. 26**

## INTERNATIONAL SEARCH REPORT

| | International application No. |
|---|---|
| | **PCT/KR2022/000544** |

**A. CLASSIFICATION OF SUBJECT MATTER**

**H04W 72/02**(2009.01)i; **H04W 72/04**(2009.01)i; **H04W 52/02**(2009.01)i; **H04W 76/28**(2018.01)i; **H04W 4/40**(2018.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 72/02(2009.01); H04L 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL DRX(SideLink Discontinuous Reception), 구성 정보(configuration information), SL 자원 집합(resource set), 자원 선택(resource selection), 선택 윈도우(selection window), 센싱 윈도우(sensing window), 자원 배제(resource exclusion)

**C. DOCUMENTS CONSIDERED TO BE RELEVANT**

| Category* | Citation of document, with indication, where appropriate, of the relevant passages | Relevant to claim No. |
|---|---|---|
| X<br>Y | LG ELECTRONICS. Discussion on physical layer design considering sidelink DRX operation. R1-2007897, 3GPP TSG RAN WG1 #103-e, E-Meeting. 01 November 2020.<br>See pages 1-8. | 1<br>2 |
| Y | HUAWEI et al. Sidelink resource allocation to reduce power consumption. R1-2007615, 3GPP TSG RAN WG1 Meeting #103-e, E-meeting. 01 November 2020.<br>See pages 4-5; and figure 5. | 2 |
| A | CMCC. Discussion on reliability and latency enhancements for mode-2 resource allocation. R1-2008032, 3GPP TSG RAN WG1 #103-e, E-meeting. 01 November 2020.<br>See pages 1-5. | 1,2 |
| A | WO 2020-198760 A2 (FUTUREWEI TECHNOLOGIES, INC.) 01 October 2020 (2020-10-01)<br>See page 12, line 13 - page 21, line 23; and figures 6-10. | 1,2 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 April 2022** | **18 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="3" align="center">**INTERNATIONAL SEARCH REPORT**</td><td>International application No.<br>**PCT/KR2022/000544**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | US 2020-0344722 A1 (SAMSUNG ELECTRONICS CO., LTD.) 29 October 2020 (2020-10-29)<br>See paragraphs [0400]-[0404]; and figure 34. | 1,2 |

Form PCT/ISA/210 (second sheet) (July 2019)

INTERNATIONAL SEARCH REPORT
Information on patent family members

International application No.

**PCT/KR2022/000544**

| Patent document cited in search report | | | Publication date (day/month/year) | Patent family member(s) | | | Publication date (day/month/year) |
|---|---|---|---|---|---|---|---|
| WO | 2020-198760 | A2 | 01 October 2020 | WO | 2020-198760 | A3 | 06 May 2021 |
| US | 2020-0344722 | A1 | 29 October 2020 | CN | 113748628 | A | 03 December 2021 |
| | | | | KR | 10-2021-0145846 | A | 02 December 2021 |
| | | | | WO | 2020-218892 | A1 | 29 October 2020 |

Form PCT/ISA/210 (patent family annex) (July 2019)